(19) **Europäisches Patentamt European Patent Office Office européen des brevets**

(11) **EP 4 191 555 B1**

(12) **EUROPEAN PATENT SPECIFICATION**

(45) Date of publication and mention
of the grant of the patent:
**30.07.2025 Bulletin 2025/31**

(21) Application number: **22207712.5**

(22) Date of filing: **16.11.2022**

(51) International Patent Classification (IPC):
**G08B 25/00** *(2006.01)* **G08B 25/10** *(2006.01)*
**H04W 40/12** *(2009.01)* **H04W 40/10** *(2009.01)*

(52) Cooperative Patent Classification (CPC):
**G08B 25/10; H04W 40/10;** G08B 25/009;
H04W 40/12; Y02D 30/70

(54) **ALARM SYSTEM, ALARM, RELAY ROUTE SETTING METHOD, PROGRAM**

ALARMSYSTEM, ALARM, RELAISROUTENEINSTELLUNGSVERFAHREN, PROGRAMM

SYSTÈME D'ALARME, ALARME, PROCÉDÉ DE RÉGLAGE DE TRAJET DE RELAIS, PROGRAMME

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **02.12.2021 JP 2021196372**

(43) Date of publication of application:
**07.06.2023 Bulletin 2023/23**

(73) Proprietor: **Panasonic Intellectual Property
Management Co., Ltd.
Osaka-shi, Osaka 540-6207 (JP)**

(72) Inventors:
• **HOSHIBA, Keitaro
Osaka, 540-6207 (JP)**
• **MIYAZAKI, Takuya
Osaka, 540-6207 (JP)**

• **KONDO, Ayumi
Osaka, 540-6207 (JP)**
• **HANAMORI, Taichi
Osaka, 540-6207 (JP)**
• **IZUTANI, Keisuke
Osaka, 540-6207 (JP)**
• **YAMAMOTO, Michio
Osaka, 540-6207 (JP)**

(74) Representative: **Appelt, Christian W.
Boehmert & Boehmert
Anwaltspartnerschaft mbB
Pettenkoferstrasse 22
80336 München (DE)**

(56) References cited:
JP-A- 2014 071 563      KR-A- 20130 142 426
KR-A- 20200 118 602      US-A1- 2020 022 059

EP 4 191 555 B1

# EP 4 191 555 B1

**Description**

[TECHNICAL FIELD]

The present disclosure relates to alarm technology and, in particular, to an alarm system, an alarm, a relay route setting method, and a program that use a multihop network.

[BACKGROUND ART]

A fire alarm outputs an alarm when it detects a fire. By building wireless communication functions in the fire alarm and forming a multihop network by a plurality of fire alarms, it is possible, when one fire alarm detects a fire, for another fire alarm to output an alarm (see, for example, JP 2011-35468 A).
US 2020/022059 A1 discloses an information processing apparatus including a first controller that controls an IoT device to perform multihop routing via at least one relay on an upload of data from the IoT device to a base station, and a second controller that controls the base station to use, on a down-link from the base station to the IoT device, a route different from a route that uses at least one relay.
KR 20130142426 A discloses a multi-hop transmission method, which, when performing multi-hop transmission between terminals in a wireless ad hoc environment, constructs a transmission path with terminals having a long lifetime.
JP 2014-071563 A discloses a wireless communication system, in which, when a predetermined event occurs, each of slave stations receives a radio signal transmitted by another slave station to a master station.

[SUMMARY OF INVENTION]

[TECHNICAL PROBLEM]

In the case the fire alarm is driven by a battery, low power consumption of the fire alarm is called for. Meanwhile, the fire alarm included in a relay route of a multihop network transfers signals so that the power consumption of the fire alarm increases as the frequency of transfer increases.
The present disclosure addresses this issue, and a purpose thereof is to provide a technology of suppressing an increase in power consumption in the alarm included in a multihop network.

[SOLUTION TO PROBLEM]

An alarm system according to an embodiment of the present invention includes a plurality of alarms that form a multihop network extending from a relay device. The plurality of alarms include a first alarm, a second alarm, and a third alarm. The third alarm is capable of communicating with the first alarm and the second alarm, the third alarm derives a first cost for a first relay route for communicating with the relay device via the first alarm, by exchanging information on quality of link with the first alarm, and derives a second cost for a second relay route for communicating with the relay device via the second alarm, by exchanging information on quality of link with the second alarm, the third alarm selects the first relay route when the first cost is smaller than the second cost. When power consumption in the first alarm grows larger than a threshold value, the first alarm transmits a notification indicating an increase in power consumption to the third alarm, and wherein the third alarm derives the first cost based on a first indicator determined by the information on quality of link with the first alarm and a second indicator determined by power consumption in the first alarm, and wherein the third alarm derives the second cost based on a first indicator determined by the information on quality of link with the second alarm and a second indicator determined by power consumption in the second alarm, and, when the third alarm receives the notification from the first alarm, the third alarm increases the second indicator in the first cost.
Another embodiment of the present invention relates to an alarm. The alarm is an alarm of a plurality of alarms that form a multihop network extending from a relay device, including: a communication unit capable of communicating with a first alarm and a second alarm of the plurality of alarms; and a control unit that derives a first cost for a first relay route for communicating with the relay device via the first alarm, by exchanging information on quality of link with the first alarm through the communication unit, derives a second cost for a second relay route for communicating with the relay device via the second alarm (600), by exchanging information on quality of link with the second alarm through the communication unit, and then selects the first relay route when the first cost is smaller than the second cost. The communication unit receives a notification indicating an increase in power consumption from the first alarm when power consumption in the first alarm grows larger than a threshold value, and, the control unit derives the first cost based on a first indicator determined by the information on quality of link with the first alarm and a second indicator determined by power consumption in the first alarm, and wherein the control unit derives the second cost based on a first indicator determined by the information on quality of link with the second alarm and a second indicator determined by power consumption in the second alarm, when the communication unit receives the notification from the first alarm, the control unit increases the second indicator in the first cost.

Still another embodiment of the present invention relates to a relay route setting method. The method is a route setting method in an alarm of a plurality of alarms that form a multihop network extending from a relay device, the alarm being capable of communicating with a first alarm and a second alarm of the plurality of alarms, the method including: deriving a first cost for a first relay route for communicating with the relay device via the first alarm, by exchanging information on quality of link with the first alarm, and deriving a second cost for a second relay route for communicating with the relay device via the second alarm, by exchanging information on quality of link with the second alarm); selecting the first relay route when the first cost is smaller than the second cost; when power consumption in the first alarm grows larger than a threshold value, receiving a notification indicating an increase in power consumption from the first alarm; and deriving the first cost based on a first indicator determined by the information on quality of link with the first alarm and a second indicator determined by power consumption in the first alarm, and deriving the second cost based on a first indicator determined by the information on quality of link with the second alarm and a second indicator determined by power consumption in the second alarm, and when the notification from the first alarm is received, increasing the second indicator in the first cost.

Optional combinations of the aforementioned constituting elements, and implementations of the disclosure in the form of methods, apparatuses, systems, recording mediums, and computer programs may also be practiced as additional modes of the present disclosure.

[ADVANTAGEOUS EFFECTS OF INVENTION]

According to the present disclosure, it is possible to suppress an increase in power consumption in the alarm included in a multihop network.

[BRIEF DESCRIPTION OF DRAWINGS]

Fig. 1 shows a configuration of an alarm system according to the embodiment;
Fig. 2 shows a configuration of the fire alarm of Fig. 1;
Figs. 3A-3D show a configuration of a super frame used in the alarm system of Fig. 1;
Fig. 4 shows a configuration of the relay device of Fig. 1;
Fig. 5 shows an exemplary assignment of time slots in the alarm system 1000 of Fig 1;
Fig. 6 shows an outline of downlink communication in the alarm system of Fig. 1;
Fig. 7 shows an outline of uplink communication in the alarm system of Fig. 1;
Fig. 8 shows an outline of routing in the alarm system of Fig. 1;
Fig. 9 is a sequence chart showing steps of routing in the alarm system of Fig. 1;
Figs. 10A-10B show a data structure of a table maintained in the n+1th fire alarm of Fig. 8;
Figs. 11A-11B show a data structure of a table maintained in the n+3th fire alarm 600n+3 of Fig. 9;
Figs. 12A-12B show an outline of the construction of the alarm system of Fig. 1;
Fig. 13 shows a configuration of the external appliance of Fig. 12A;
Fig. 14 shows a screen displayed on the display unit of Fig. 13;
Figs. 15A-15B shows a partial configuration of the alarm system of Fig. 1;
Fig. 16 shows an outline of downlink communication in the alarm system of Fig. 15A; and
Figs. 17A-17B show an outline of downlink communication in the alarm system of Fig. 15B.

[DESCRIPTION OF EMBODIMENTS]

A brief summary will be given before describing the present disclosure in specific details. The embodiment relates to an alarm system provided in a facility such as a multi-unit apartment building, an independent housing, an office, and a hospital. In the alarm system, a relay device is connected to a management device, and a plurality of fire alarms are connected to the relay device in a wireless multihop network. In this network, the management device represents the higher level, and the fire alarm with the largest hop count from the relay device represents the lower level. Upon detecting an outbreak of a fire, the fire alarm transfers a result of detection to the relay device, and the relay device transfers the result of detection to the management device. When the result of detection is received, the management device selects one or more fire alarms that should output an alarm and transmits an instruction to output an alarm to the one or more selected fire alarms as the ultimate destinations. The relay device and the fire alarm transfer the instruction to output an alarm to the fire alarm at the ultimate destination, and the fire alarm at the ultimate destination outputs an alarm upon receiving the instruction to output an alarm.

Given that the line for a signal from the relay device to the fire alarm with the largest hop count from the relay device is referred to as "downlink line", the line for a signal from the fire alarm with the largest hop count to the relay device is referred to as "uplink line". In this embodiment, one frame is formed by arranging a plurality of time slots, and one super frame is formed by arranging a plurality of frames. Further, one fire alarm is allocated to one time slot for the downlink line (hereinafter, "downlink communication time slot") and is also allocated to one time slot for the uplink line (hereinafter, "uplink communication time slot"). The downlink communication time slot is used for transfer on the downlink line, and the uplink communication time slot is used for transfer on the uplink line.

In the downlink line, a signal for establishing synchronization on the multihop network (hereinafter, "synchronization signal") is periodically transferred in addition to the instruction to output an alarm. On the other hand, the uplink line is used mainly to transfer the result of detection. In the following description, a synchronization signal, a detection result, an instruction to output an alarm may generically be referred to as "communication signals".

Hereinafter, the embodiment will be described in the order (1) basic configuration, (2) routing, (3) construction, and (4) revision to time slot assignment.

(1) Basic configuration

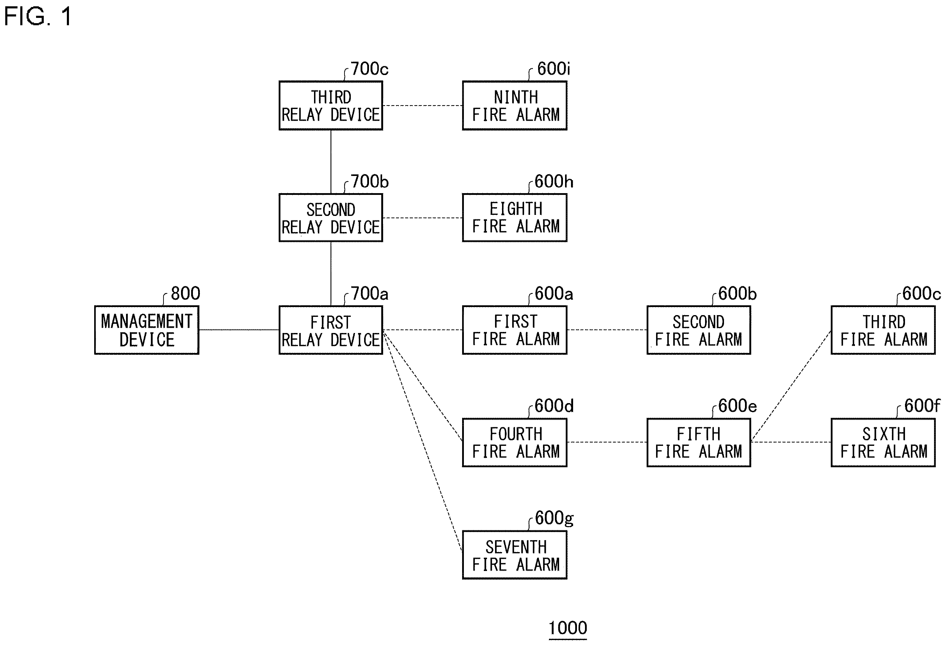

Fig. 1 shows a configuration of an alarm system 1000. The alarm system 1000 includes a first fire alarm 600a through a ninth fire alarm 600i, which are generically referred to as fire alarms 600, a first relay device 700a through a third relay device 700c, which are generically referred to as relay devices 700, and a management device 800. The number of fire alarms 600 is not limited to "9", and the number of relay devices 700 is not limited to "3".

The alarm system 1000 is a system applied to facilities such as houses, offices, and commercial facilities to detect a fire and alert that a fire has broken out. The plurality of fire alarm 600 are, for example, home fire alarms and are provided with fire detection sensors. The plurality of fire alarm 600 are provided on, for example, the ceilings of facilities but may be provided on the walls, etc.

The first fire alarm 600a through the sixth fire alarm 600f form a wireless multihop network extending from the first relay device 700a. For example, a relay route that links the first relay device 700a, the first fire alarm 600a, and the second fire alarm 600b and a relay route that links the first relay device 700a, the fourth fire alarm 600d, the fifth fire alarm 600e, and the third fire alarm 600c are formed. Further, a relay route that links the first relay device 700a, the fourth fire alarm 600d, the fifth fire alarm 600e, and the sixth fire alarm 600f and a relay route that links the first relay device 700a and the seventh fire alarm 600g are also formed. These relay routes are determined by the respective fire alarm 600 and are shared by the first relay device 700a and the management device 800.

In these relay routes, the first fire alarm 600a, the fourth fire alarm 600d, and the seventh fire alarm 600g can communicate with the first relay device 700a in "1" hop. The second fire alarm 600b and the fifth fire alarm 600e can communicate with the first relay device 700a in "2" hops. The third fire alarm 600c and the sixth fire alarm 600f can communicate with the first relay device 700a in "3" hops.

The second relay device 700b, the third relay device 700c, the eighth fire alarm 600h, and the ninth fire alarm 600i are configured in a manner similar to that of the first relay device 700a, the first fire alarm 600a, etc. For example, a multihop network starting from the first relay device 700a is provided on the first floor of a facility, a multihop network starting from the second relay device 700b is provided on the second floor of the facility, and a multihop network starting from the third relay device 700c is provided on the third floor of the facility. Different frequencies are used in the multihop network starting from the first relay device 700a, the multihop network starting from the second relay device 700b, and the multihop network starting from the third relay device 700c. Further, the first relay device 700a, the second relay device 700b, and the third relay device 700c communicate with each other wirelessly or by wire.

Thus, the relay device 700 communicates with the plurality of fire alarm 600 that form the multinetwork wirelessly and communicates with the other relay devices 700 wirelessly or by wire. It can be said that the relay device 700 relays communication between the plurality of fire alarm 600 included in the multihop network. Further, the first relay device 700a is connected to the management device 800 by a cable and communicates with the management device 800 by wire.

The management device 800 is, for example, a controller of a home energy management system (HEMS) provided in the facility. The management device 800 can communicate with a plurality of appliances provided in the facility. The plurality of appliances include, for example, air conditioners, illumination appliances, hot water dispensers, etc. having a communication function. Further, the management device 800 can communicate with the first relay device 700a provided in the facility. The management device 800 can also communicate with the second relay device 700b, the third relay device 700c, and the fire alarms 600 via the first relay device 700a.

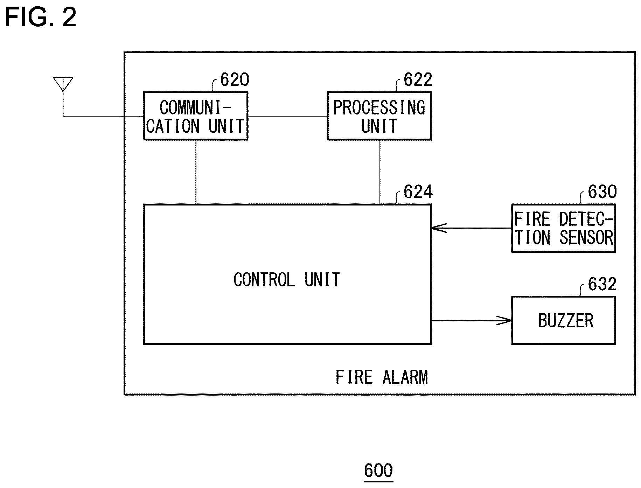

Fig. 2 shows a configuration of the fire alarm 600. The fire alarm 600 includes a communication unit 620, a processing unit 622, a control unit 624, a fire detection sensor 630, and a buzzer 632. A publicly known technology may be used in the fire detection sensor 630. For example, the fire detection sensor 630 may be an optical smoke detection sensor and may detect a fire by detecting the smoke in a fire by utilizing diffuse reflection of light. For example, the fire detection sensor 630 may be a heat detection sensor and may detect a fire by detecting the heat from a fire. For example, the fire detection sensor 630 may be a carbon monoxide detection sensor and may detect a fire by detecting the density of carbon monoxide generated by combustion in a fire. For example, the fire detection sensor 630 may be an infrared detection sensor and may detect a fire by detecting infrared rays radiated by combustion in a fire.

The communication unit 620 communicates with the other fire alarm 600 or the relay device 700 wirelessly. The processing unit 622 processes a signal received by the communication unit 620 or generates a signal that should be transmitted from the communication unit 620. The control unit 624 controls the operation of the communication unit 620 and the processing unit 622. The detail of the control unit 624 will be described later. The buzzer 632 can output a buzzer sound. The fire alarm 600 may be configured not to include the buzzer 632 and include the fire detection sensor 630. In other words, the fire alarm 600 may be configured to have the detection function and the communication function. The fire alarm 600 configured as described above can be said to be a sensor capable of alerting that a fire is detected.

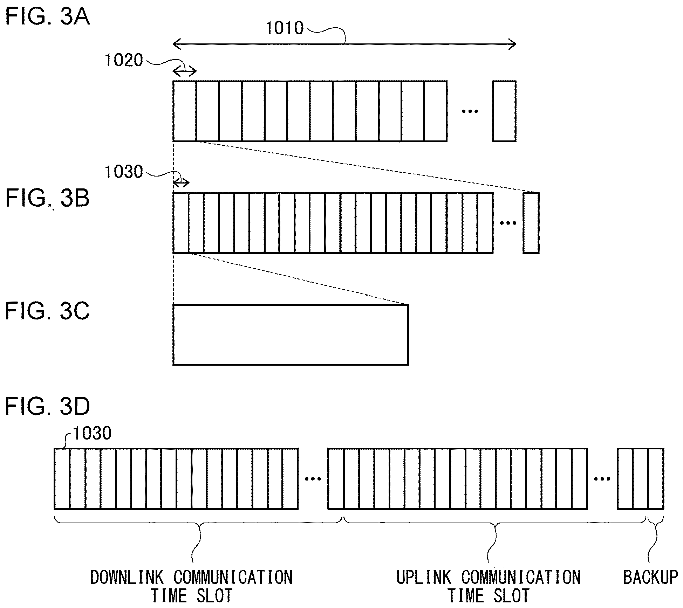

Figs. 3A-3D show a configuration of a super frame used in the alarm system 1000. As shown in Fig. 3A, a predefined period of time is defined as the super frame 1010. The super frame 1010 is arranged repeatedly. The super frame 1010 is divided into a plurality of frames 1020. As shown in Fig. 3B, one frame 1020 is divided into a plurality of time slots 1030. Fig. 3C shows one time slot 1030. The communication signal is transmitted in the time slot 1030. The duration of the communication signal is shorter than the duration of one time slot 1030.

Fig. 3D shows the usage of the plurality of time slots 1030 included in the frame 1020 shown in Fig. 3B. Of the plurality of time slots 1030, one or more time slots 1030 in the leading portion are used as "downlink communication time slots". One time slot 1030 following the downlink communication time slots is used as an "uplink communication time slot". One or more time slots 1030 following the uplink communication time slot are used as "backup slots". The number of downlink communication time slots and the number of uplink communication time slots are identical and are equal to or larger than the number of fire alarm 600 included in the multihop network. Backup slots may not be provided.

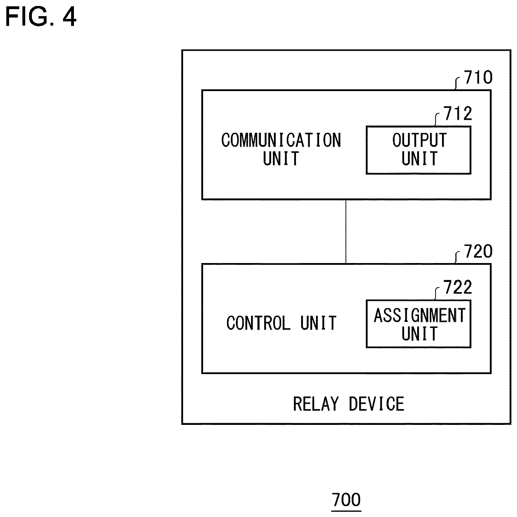

Fig. 4 shows a configuration of the relay device 700. The relay device 700 can be said to be a controller for the plurality of fire alarms 600 that form the multihop network. The relay device 700 includes a communication unit 710, a control unit 720. The communication unit 710 includes an output unit 712. The control unit 720 includes an assignment unit 722. The communication unit 710 has the communication function for communicating with the plurality of relay devices 700 and also has the communication function for communicating with the management device 800. The control unit 720 controls the operation of the relay device 700.

By communicating with the plurality of fire alarms 600 that form the multihop network, the communication unit 710 receives the result of routing performed in the respective fire alarms 600. Routing performed in the respective fire alarms 600 will be described later. The result of routing indicates the relay routes as shown in Fig. 1.

The assignment unit 722 assigns a combination of one downlink communication time slot and one uplink communication time slot shown in Fig. 3D to one fire alarm 600 based on the result of routing. Assignment by the assignment unit 722 will also be described later. The combination of the downlink communication time slot and the uplink communication time slot is changed depending on the fire alarm 600. The output unit 712 outputs the result of assignment by the assignment unit 722 to the plurality of fire alarms 600. The result of assignment shows the correspondence between the combination of the downlink communication slot/the uplink communication slot and the fire alarm 600.

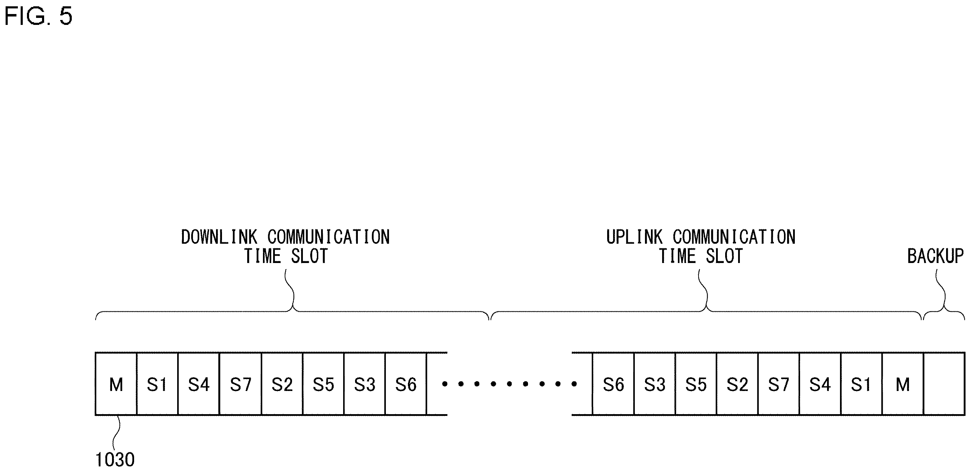

Fig. 5 shows an exemplary assignment of time slots in the alarm system 1000 as similarly shown in Fig. 3D. The figure shows the assignment of a plurality of time slots 1030 to the first relay device 700a, the first fire alarm 600a through the seventh fire alarm 600g of Fig. 1. "M" in Fig. 5 denotes the first relay device 700a, and "S1" through "S7" denote the first fire alarm 600a through the seventh fire alarm 600g, respectively. The first relay device 700a, the first fire alarm 600a, the fourth fire alarm 600d, the seventh fire alarm 600g, the second fire alarm 600b, the fifth fire alarm 600e, the third fire alarm 600c, and the sixth fire alarm 600f are sequentially allocated to downlink communication time slots, with the first relay device 700a preceding the rest. As described above, the hop count from the first fire alarm 600a, the fourth fire alarm 600d, and the seventh fire alarm 600g to the first relay device 700a is "1". The hop count from the second fire alarm 600b and the fifth fire alarm 600e to the first relay device 700a is "2", and the hop count from the third fire alarm 600c and the sixth fire alarm 600f to the first relay device 700a is "3". In other words, the smaller the hop count to the first relay device 700a, the earlier the downlink communication slot assigned to the fire alarm 600.

The the sixth fire alarm 600f, the third fire alarm 600c, the fifth fire alarm 600e, the second fire alarm 600b, the seventh fire alarm 600g, the fourth fire alarm 600d, the first fire alarm 600a, and the first relay device 700a are sequentially allocated to uplink communication time slots, with the sixth fire alarm 600f preceding the rest. In other words, the larger the hop count to the first relay device 700a, the earlier the uplink communication time slot assigned to the fire alarm 600.

To highlight the fifth fire alarm 600e with the hop count "2", the downlink communication slot earlier than the time slot assigned to the sixth fire alarm 600f with the hop count "2" is assigned to the fifth fire alarm 600e. The downlink communication time slot is used when a signal (communication signal) is transferred in a direction away from the first relay device 700a in the multihop network. Further, the uplink communication slot later than the time slot assigned to the sixth fire alarm 600f is assigned to the fifth fire alarm 600e. The uplink communication time slot is used when a signal (communication signal) is transferred in a direction toward the first relay device 700a in the multihop network. In other words, of the plurality of time slots 1030, the relay device 700 determines the time slot 1030 assigned to each fire alarm 600 in accordance with the hop count between the fire alarm 600 and the relay device 700.

The downlink communication time slot "S5" and the uplink communication time slot "S5" are assigned to the fifth fire alarm 600e, and the fifth fire alarm 600e transmits a signal (communication signal) in the downlink communication time slot "S5" or the uplink communication time slot "S5". The downlink communication time slot "S6" and the uplink communication time slot "S6" are assigned to the sixth fire alarm 600f, and the sixth fire alarm 600f transmits a signal (communication signal) in the downlink communication time slot "S6" or the uplink communication time slot "S6".

The assignments of time slots 1030 is determined by the assignment unit 722 of the first relay device 700a but may be determined by the management device 800. For example, the first relay device 700a or the management device 800 determines the assignment of the time slots 1030 based on the information on the relay routes. The first relay device 700a or the management device 800 notifies the fire alarms 600 of the assignment of the time slots 1030 thus determined. Therefore, the fire alarms 600 also have the knowledge of the assignment of the time slots 1030. As a result, each fire alarm 600 has the knowledge of the time slot 1030 in which the communication signal should be transmitted and which is assigned to the fire alarm 600. The fire alarm 600 also has the knowledge of the time slot 1030 in which the communication signal from the adjacent fire alarm 600 or the relay device 700 on the relay route can be received.

In this setup, the communication unit 620 of the fire alarm 600 may perform an intermittent receiving operation to reduce power consumption. In the intermittent receiving operation in the communication unit 620, a receiving operation is performed during a predefined period of time in the leading portion of the time slot 1030, and the receiving operation is suspended in the remainder of the time slot 1030 if a signal (communication signal) is not received during the predefined period of time. When a signal is received during the predefined period of time in the leading portion of the time slot 1030, the receiving operation is continued in the remainder of the time slot 1030.

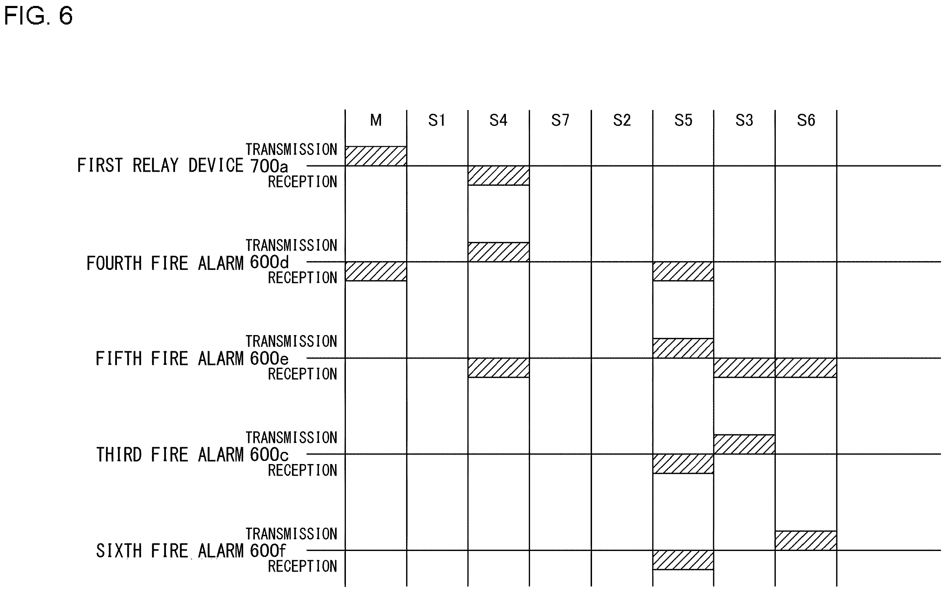

Fig. 6 shows an outline of downlink communication in the alarm system 1000. The figure shows downlink communication time slots of Fig. 5. The first relay device 700a periodically transmits a synchronization signal to the plurality of fire alarm 600 that form the multihop network. The synchronization signal is, for example, a beacon signal. The synchronization signal is transmitted in, for example, the leading frame 1020 of the super frame 1010 shown in Fig. 3A and is not transmitted in the remaining frames 1020. The first relay device 700a transmits the synchronization signal in the time slot 1030 "M" in the leading frame 1020 of the super frame 1010. When the fourth fire alarm 600d receives the synchronization signal in the time slot 1030 "M", the fourth fire alarm 600d transfers the synchronization signal in the time slot 1030 "S4". Further, the fourth fire alarm 600d transmits a response signal to the first relay device 700a in the time slot 1030 "S4". The response signal is, for example, Ack (ACKnowledgment). The response signal may be included in a portion of the synchronization signal.

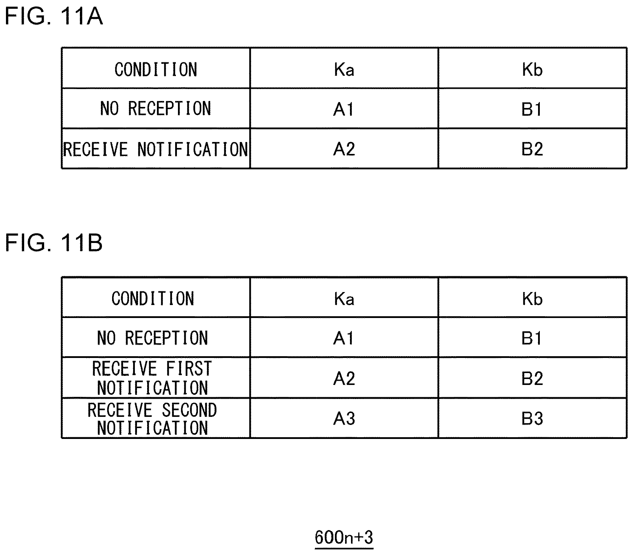

The first relay device 700a receives the response signal in the time slot 1030 "S4". When the fifth fire alarm 600e receives the synchronization signal in the time slot 1030 "S4", the fifth fire alarm 600e transfers the synchronization signal and transmits the response signal to the fourth fire alarm 600d in the time slot 1030 "S5". The fourth fire alarm 600d receives the response signal in the time slot 1030 "S5". The fourth fire alarm 600d transfers the response signal from the fifth fire alarm 600e to the first relay device 700a in the time slot 1030 "S4" of the next frame (not shown in Fig. 11).

When the third fire alarm 600c receives the synchronization signal in the time slot 1030 "S5", the third fire alarm 600c transfers the synchronization signal and transmits the response signal to the fifth fire alarm 600e in the time slot 1030 "S3". When the sixth fire alarm 600f receives the synchronization signal in the time slot 1030 "S5", the sixth fire alarm 600f transfers the synchronization signal and transmits the response signal to the fifth fire alarm 600e in the time slot 1030 "S6".

The fifth fire alarm 600e receives the response signal in the time slots 1030 "S3" and "S6". The fifth fire alarm 600e transfers the response signal from the third fire alarm 600c and the response signal from the sixth fire alarm 600f to the fourth fire alarm 600d in the time slot 1030 "S5" of the next frame (not shown in Fig. 6). The fourth fire alarm 600d transfers the response signal from the fifth fire alarm 600e to the first relay device 700a in the time slot 1030 "S4" in the frame after next.

Thus, the synchronization signal is transferred in the frame 1020 in which the first relay device 700a transmitted the synchronization signal. Further, the fire alarm 600 receiving the synchronization signal from the first relay device 700a establishes timing synchronization with the first relay device 700a based on the synchronization signal. A publicly known technology may be used for timing synchronization so that a description thereof is omitted.

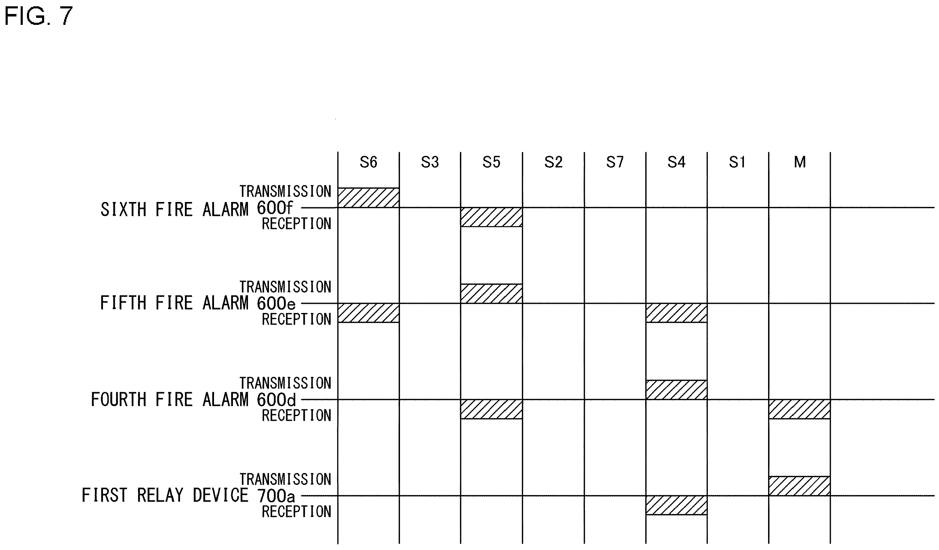

Fig. 7 shows an outline of uplink communication in the alarm system 1000. The figure shows uplink communication time slots of Fig. 5. It is assumed here that the fire detection sensor 630 of the sixth fire alarm 600f detects an outbreak of a fire. The processing unit 622 of the sixth fire alarm 600f causes the communication unit 620 to transmit a detection result. The detection result includes identification information on the sixth fire alarm 600f that has detected the fire. The communication unit 620 of the sixth fire alarm 600f transmits the detection result in the time slot 1030 "S6".

The fifth fire alarm 600e receives the detection result in the time slot 1030 "S6". Subsequently, the fifth fire alarm 600e transfers the detection result in the time slot 1030 "S5". Further, the fifth fire alarm 600e transmits a response signal to the sixth fire alarm 600f in the time slot 1030 "S5". The response signal may be included in a portion of the detection result.

The sixth fire alarm 600f receives the response signal in the time slot 1030 "S5". The fourth fire alarm 600d receives the detection result in the time slot 1030 "S5". The fourth fire alarm 600d transfers the detection result and transmits a response signal to the fifth fire alarm 600e in the time slot 1030 "S4".

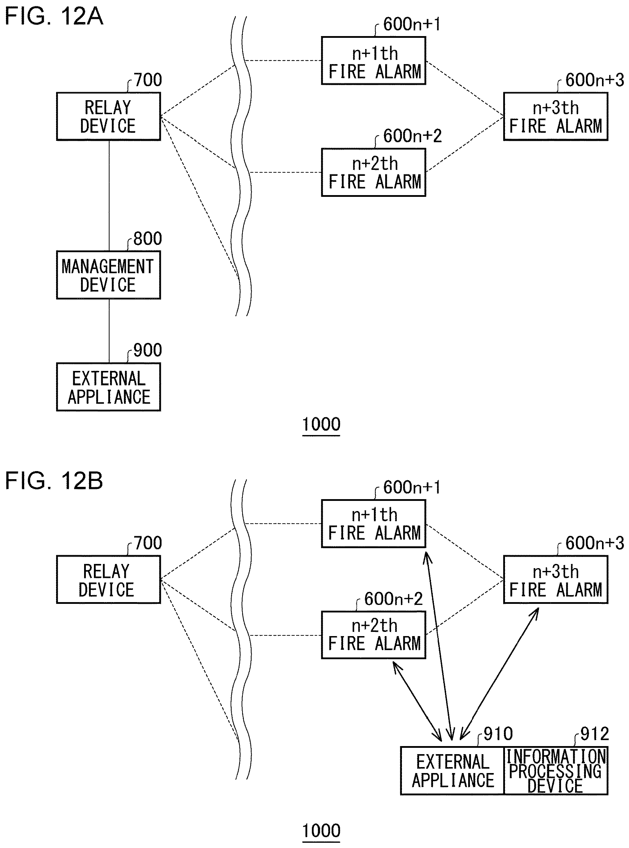

The fifth fire alarm 600e receives the response signal in the time slot 1030 "S4". The fifth fire alarm 600e transfers the response signal from the fourth fire alarm 600d to the sixth fire alarm 600f in the time slot 1030 "S5" of the next frame 1020 (not shown in Fig. 12).

The first relay device 700a receives the detection result in the time slot 1030 "S4". In a manner as already described, the first relay device 700a transmits a response signal in the time slot 1030 "M". The response signal is transferred by the fourth fire alarm 600d and the fifth fire alarm 600e and is received by the sixth fire alarm 600f.

When the first relay device 700a receives a detection result from the fourth fire alarm 600d, the first relay device 700a transfers the detection result to the management device 800. When the management device 800 receives the detection result, the management device 800 identifies the fire alarm 600 that should output an alarm based on the identification information included in the detection result. The correspondence between the identification information and the information on the fire alarm 600 that should output an alarm is stored in the management device 800 in advance. The management device 800 transmits an instruction to output an alarm to the first relay device 70, designating the identified fire alarm 600 as the ultimate destination.

When the fire alarms 600 identified by the management device 800 are the third fire alarm 600c and the sixth fire alarm 600f, an instruction to output an alarm is received by the third fire alarm 600c and the sixth fire alarm 600f by transferring the signal in the same manner as illustrated in Fig. 6. In this case, the instruction to output an alarm is transmitted instead of the synchronization signal of Fig. 6. When the instruction to output an alarm is received from the management device 800 by way of the first relay device 700a, the second relay device 700b and the third relay device 700c transfer the instruction to output an alarm to the fire alarm 600. When the communication units 620 of the third fire alarm 600c and the sixth fire alarm 600f receive the instruction to output an alarm, the control unit 624 causes the buzzer 632 to sound an alarm. The control unit 624 may cause a light-emitting device to flash.

(2) Routing

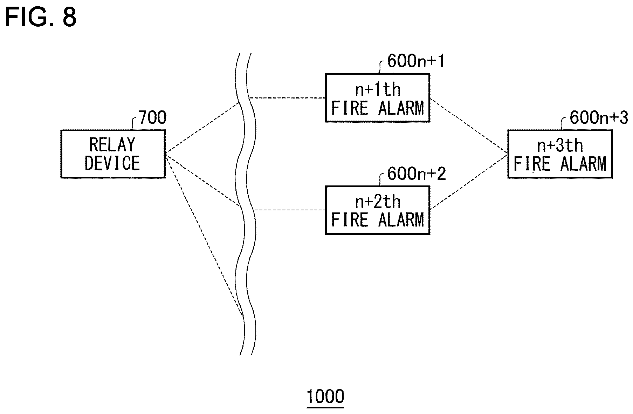

In the above description, it is assumed that the relay routes as shown in Fig. 1 are formed. A description will be given here of the formation and modification of relay routes with reference also to Fig. 8. Fig. 8 shows an outline of routing in the alarm system 1000. Fig. 8 shows an n+1th fire alarm 600n+1, an n+2th fire alarm 600n+2, an n+3th fire alarm 600n+3, and the relay device 700 of the alarm system 1000. The n+1th fire alarm 600n+1, the n+2th fire alarm 600n+2, and the n+3th fire alarm 600n+3 each corresponds to one of the fire alarms 600 of Fig. 1. Fire alarms 600 other than the n+1th fire alarm 600n+1 and the n+2th fire alarm 600n+2 may be located around the n+3th fire alarm 600n+3. For example, an n+4th fire alarm 600n+4 (not shown) may be located.

Hereinafter, (2-1) formation of relay route and (2-2) modification of relay route will be described in the stated order.

(2-1) Formation of relay route

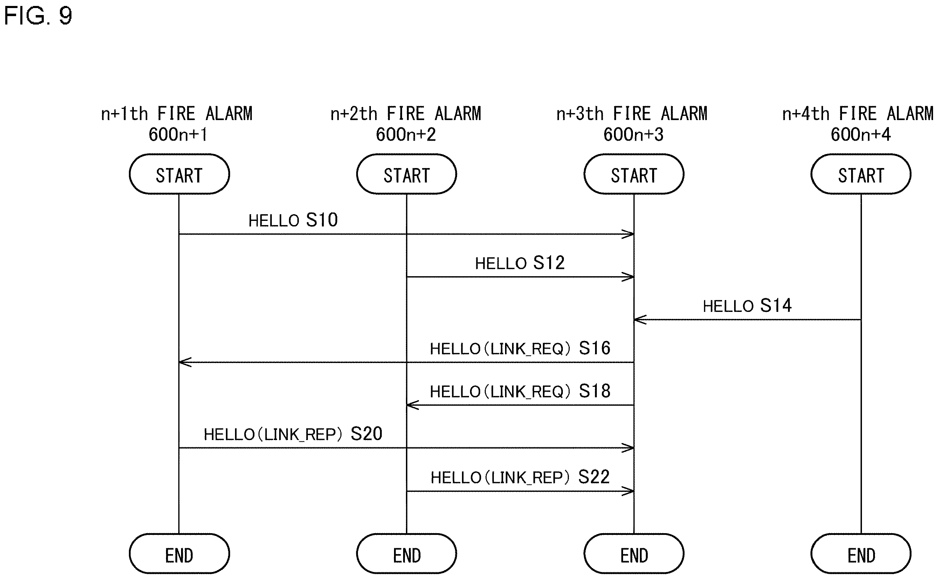

Fig. 9 is a sequence chart showing steps of routing in the alarm system 1000. A routing process will be described by highlighting the n+3th fire alarm 600n+3. Each fire alarm 600 broadcasts a HELLO message an predetermined intervals. The HELLO message includes information on quality of route to the relay device 700. The communication unit 620 of the n+3th fire alarm 600n+3 receives the HELLO message from the n+1th fire alarm 600n+1, the n+2th fire alarm 600n+2, and the n+4th fire alarm 600n+4 (S10, S12, S14).

The communication unit 620 of the n+3th fire alarm 600n+3 measures the reception power of each HELLO message received, and the processing unit 622 derives the link quality for each fire alarm 600 based on the measured reception power. The link quality varies in accordance with the reception power. The larger the reception power, the smaller the value of link quality. The route quality mentioned above is defined in a manner similar to the link quality. The control unit 624 derives a tentative route cost as follows by adding the link quality of the n+1th fire alarm 600n+1 to the route quality included in the HELLO message from the n+1th fire alarm 600n+1.

$$\text{tentative route cost} = \text{route quality} + Ka \times \text{link quality} + Kb \times C$$

... (expression 1)

where Ka and Kb are coefficients, and C is a predetermined constant. Given that Kb is "0" when the relay route is formed, Kb×C is neglected.

The control unit 624 also derives a tentative route cost for the other fire alarms 600. The control unit 624 compares a plurality of tentative route costs and selects several fire alarms 600 as preferential link destinations in the ascending order of tentative route cost. In this case, the n+1the fire alarm 600n+1 and the n+2th fire alarm 600n+2 are selected as preferential link destinations, for example.

The communication unit 620 of the n+3th fire alarm 600n+3 includes the addresses of the selected fire alarm 600 and the link quality identified in the reception in the LINK_REQ submessage of the HELLO message and transmits the resultant message (S16, S18). The n+1th fire alarm 600n+1 and the n+2th fire alarm 600n+2 include the link quality in the reverse direction in the LNK_REP submessage and transmits the resultant message (S20, S22).

The communication unit 620 of the n+3th fire alarm 600n+3 receives the LINK_REP submessage. The control unit 624 of the n+3th fire alarm 600n+3 compares the link quality included in the LINK_REP submessage from the n+1th fire alarm 600n+1 with the link quality derived based on the reception power already measured and selects the link quality with a larger value. The control unit 624 also derives a definitive route cost as follows by adding the selected link quality and the route quality for the n+1th fire alarm 600n+1.

$$\texttt{definitive route cost=route quality+Ka×Max(link}$$

$$\texttt{quality)+Kb×C … (expression 2)}$$

where Max indicates selecting the maximum link quality.

The control unit 624 also derives a definitive route cost for the n+2th fire alarm 600n+2. The control unit 624 compares the definitive route cost for the n+1th fire alarm 600n+1 with the definitive route cost for the n+2th fire alarm 600n+2 and selects the route with a smaller cost as the relay route. The relay route not selected may be used as a substitute route.

In other words, the n+3th fire alarm 600n+3 derives the definitive route cost (hereinafter, "first cost") for the relay route for communication with the relay device 700 by way of the n+1th fire alarm 600n+1 (hereinafter, "first relay route") by exchanging link quality information with the n+1th fire alarm 600n+1. Further, the n+3th fire alarm 600n+3 derives the definitive route cost (hereinafter, "second cost") for the relay route for communication with the relay device 700 by way of the n+2th fire alarm 600n+2 (hereinafter, "second relay route") by exchanging link quality information with the n+2th fire alarm 600n+2. Further, the n+3th fire alarm 600n+3 compares the first cost and the second cost and selects the relay route with a smaller cost preferentially. By performing a process like this in the respective fire alarms 600, the relay routes are formed. Information relating to the relay route (substitute route) formed in the respective fire alarms 600 is transmitted to the management device 800 by way of the relay device 700. The management device 800 determines the assignment of the time slots 1030 in accordance with the hop count, based on the information relating to the relay route (substitute route).

(2-2) Modification of relay route

When the relay route is formed as described above, the fire alarms 600 included in the relay route transfer the signal. Transfer of the signal increases the power consumption in the fire alarm 600. In the case the fire alarm 600 is driven by a battery, it is preferred that the power consumption is small. In order to suppress an increase in the power consumption in the fire alarm 600, the relay route is modified.

The control unit 624 of the n+1th fire alarm 600n+1 included in the first relay route connecting the n+3th fire alarm 600n+3 and the relay device 700 of Fig. 8 measures the communication frequency based on the number of times of communication of the communication unit 620 in a predetermined period of time. The number of times of communication includes at least one of the number of times of transmission or the number of times of reception. The control unit 624 maintains the correspondence between the communication frequency and the power consumption and derives the power consumption based on the communication frequency. In the correspondence, the larger the communication frequency, the larger the power consumption.

Further, the control unit 624 of the n+1th fire alarm 600n+1 may count the number of other fire alarms 600 that the n+1th fire alarm 600n+1 directly communicates with. The control unit 624 maintains the correspondence between the number of other fire alarms 600 and the power consumption and derives the power consumption based on the number of other fire alarms 600. In the correspondence, the larger the number of other fire alarms 600, the larger the power consumption. Further, the control unit 624 of the n+1th fire alarm 600n+1 may measure the battery level of the n+1th fire alarm 600n+1. The control unit 624 maintains the correspondence between the battery level and the power consumption and derives the power consumption based on the battery level. In the correspondence, the lower the battery level, the larger the power consumption.

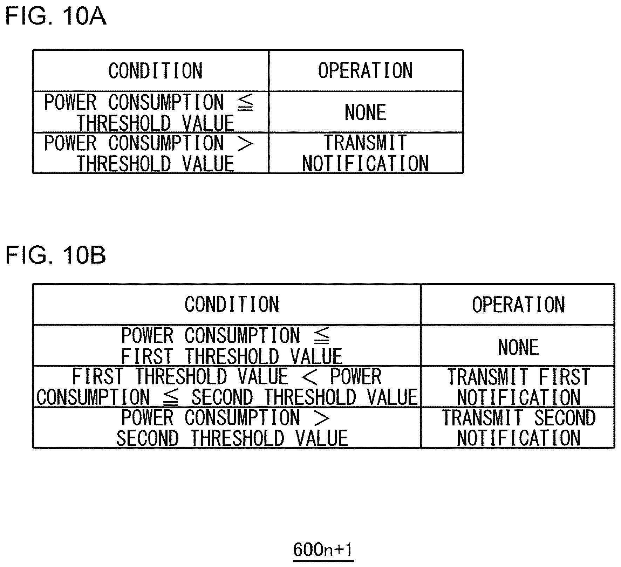

The control unit 624 maintains a threshold value for the power consumption. Figs. 10A-10B show a data structure of a table maintained in the n+1th fire alarm 600n+1. Fig. 10A shows conditions for power consumption and threshold value and shows operations determined by the conditions. When the power consumption grows larger than the threshold value, the control unit 624 determines to transmit a notification indicating an increase in the power consumption. When the power consumption is equal to or smaller than the threshold value, on the other hand, the control unit 624 determines not to transmit a notification. Fig. 10B will be described later, and reference is made back to Fig. 8. When it is determined to transmit a notification, the communication unit 620 of the n+1th fire alarm 600n+1 transmits a notification to the n+3th fire alarm 600n+3.

As described above, the control unit 624 of the n+3th fire alarm 600n+3 determines the relay route based on the definitive route cost of expression (2). Depending on whether a notification is received from the n+1th fire alarm 600n+1, the control unit 624 controls the values of Ka, Kb of expression (2). Figs. 11A-11B show a data structure of a table maintained in the n+3th fire alarm 600n+3. Fig. 11A show values of the coefficients Ka, Kb responsive to the case of reception of a notification and the case of non-reception of a notification. The coefficients Ka and Kb are related such that Ka+Kb=1.

When a notification is not received, the coefficient Ka will be "A1" and the coefficient Kb will be "B1". The case of non-reception of a notification includes the case of (2-1) formation of relay route. For example, "A1" is "1" and "B1" is "0". When a notification is not received, therefore, the third term on the right side of expression (2) is neglected.

When a notification is received, the coefficient Ka will be "A2" and the coefficient Kb will be "B2". "B2" is a value larger than "0" so that "A2" is a value smaller than "1". A2 and B2 may be such that A2>B2, A2=B2, or A2<B2. When a notification is received, therefore, the impact from the third term on the right side of expression (2) will be large, and the definitive route cost will be larger as compared with the case of non-reception of a notification. As a result, it will be less likely that the first relay route including the n+1th fire alarm 600n+1 is selected. In other words, the n+3th fire alarm 600n+3 makes it less likely that the first relay route including the n+1th fire alarm 600n+1 is selected when a notification from the n+1th fire alarm 600n+1 is received.

The second term on the right side of the definitive route cost given by expression (2) is "Ka×Max (link quality)" and so can be said to be an indicator (hereinafter, "first indicator") determined by the information on quality of link with the n+1th fire alarm 600n+1. The third term on the right side of the definitive route cost given by expression (2) is "Kb×C" and so can be said to be an indicator (hereinafter, "second indicator") determined by the power consumption in the n+1th fire alarm 600n+1. When a notification is received, the control unit 624 makes it less likely that the first relay route is selected, by increasing the impact from the second indicator in the definitive route cost. Such a process is also performed in relation to the other fire alarms 600.

The values of the coefficients Ka, Kb are hitherto adjusted in two steps. However, the values of the coefficients Ka, Kb may be adjusted in three or more steps. Fig. 10B shows conditions for power consumption and threshold value and shows operations determined by the conditions. The control unit 624 of the n+1th fire alarm 600n+1 defines the first threshold value and the second threshold value larger than the firs threshold value for power consumption. When the power consumption is larger than the first threshold value and equal to or smaller than the second threshold value, the control unit 624 determines to transmit the first notification indicating an increase in the power consumption. When the power consumption grows larger than the second threshold value, the control unit 624 determines to transmit the second notification indicating a further increase in the power consumption. When the power consumption is equal to or smaller than the first threshold value, on the other hand, the control unit 624 determines not to transmit the first notification or the second notification. Reference is made back to Fig. 8. When it is determined to transmit the first notification, the communication unit 620 of the n+1th fire alarm 600n+1 transmits the first notification to the n+3th fire alarm 600n+3. When it is determined to transmit the second notification, the communication unit 620 transmits the second notification to the n+3th fire alarm 600n+3.

Depending on whether the first notification or the second notification from the n+1th fire alarm 600n+1 is received, the control unit 624 of the n+3th fire alarm 600n+3 controls the values of Ka, Kb of expression (2). Fig. 11B show values of Ka, Kb responsive to the case of non-reception of the first notification or the second notification and the case of reception of the first notification or the second notification. In this case, too, the coefficients Ka and Kb are related such that Ka+Kb=1.

When the first notification or the second notification is not received, the coefficient Ka will be "A1" and the coefficient Kb will be "B1". For example, "A1" is "1" and "B1" is "0". When the first notification is received, the coefficient Ka will be "A2" and the coefficient Kb will be "B2". When the second notification is received, the coefficient Ka will be "A3" and the coefficient Kb will be "B3". "B3" is a value larger than "B2" and "A3" is a value larger than "A2". In other words, the control unit 624 increases the impact from the second indicator in the definitive route cost when the second notification is received from the n+1th fire alarm 600n+1 by an amount larger than than when the first notification is received.

(3) Construction

A description will now be given of a technology for facilitating the construction of a multihop network of the alarm system 1000. In particular, a technology of providing information for determining at which position the fire alarm 600 should be constructed. Figs. 12A-12B show an outline of the construction of the alarm system 1000. Fig. 12A shows the first example. The alarm system 1000 includes an external appliance 900 in addition to the features of Fig. 8. The external appliance 900 is, for example, a computer and can communicate with the management device 800.

Routing in a multihop network is performed after several fire alarms 600 are provided near the relay device 700 instead of being performed after all of the fire alarms 600 are provided. After routing for the several fire alarms 600 is completed, several additional fire alarms 600 are provided, and routing is updated. Thus, routing is updated to adapt to the fire alarms 600 additionally provided in steps.

It is assumed here that the n+1th fire alarm 600n+1 and the n+2th fire alarm 600n+2 are provided before the n+3th fire alarm 600n+3 is provided. Each of the n+1th fire alarm 600n+1 and the n+2th fire alarm 600n+2 derives the definitive route cost through the aforementioned process before selecting a relay route based on the definitive route cost. The communication unit 620 of each of the n+1th fire alarm 600n+1 and the n+2th fire alarm 600n+2 transmits the information relating to the relay route. The information relating to the relay route includes the definitive route cost. The information relating to the relay route may also include the definitive route cost for a relay route other than the selected relay route (e.g. the substitute route).

The information relating to the relay route transmitted from the n+1th fire alarm 600n+1 and the n+2th fire alarm 600n+2 is transferred along the relay route and received by the relay device 700. The relay device 700 transmits the information relating to the relay route to the management device 800. The management device 800 receives the information relating to the relay route.

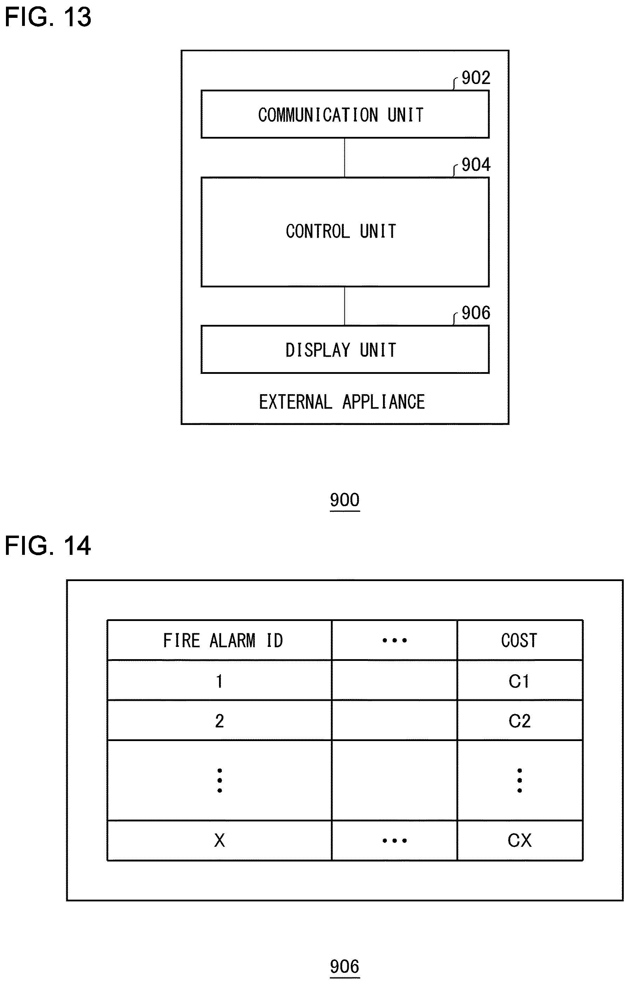

Fig. 13 shows a configuration of the external appliance 900. The external appliance 900 is, for example, a personal computer or a table terminal device. The external appliance 900 includes a communication unit 902, a control unit 924, and a display unit 906. The communication unit 902 performs a communication process for communicating with the management device 800. The constructor manipulates the external appliance 900 to access the management device 800, and the communication unit 902 receives the information relating to the relay route from the management device 800. The control unit 904 generates a screen based on the information relating to the relay route and displays the generated screen on the display unit 906.

Fig. 14 shows a screen displayed on the display unit 906. The identification information on each fire alarm 600, the cost, etc. are displayed as the information relating to the relay route. The constructor checks the status of the relay route by checking the information relating to the relay route displayed on the display unit 906.

The constructor additionally provides the n+3th fire alarm 600n+3 as a new fire alarm 600 in the multihop network. The plurality of fire alarms 600 including the n+1th fire alarm 600n+1, the n+2th fire alarm 600n+2, and the n+3th fire alarm 600n+3 update the definitive route cost when the new fire alarm 600 is added and updates the relay route based on the updated definitive route cost. The communication unit 620 of each of the plurality of fire alarms 600 transmits the information relating to the relay route. In a manner as already described, the management device 800 receives the information relating to the relay route, and the external appliance 900 displays the updated information relating to the relay route.

Fig. 12B shows the second example. The alarm system 1000 includes an external appliance 910 and an information processing device 912 in addition to the features of Fig. 13. The external appliance 910 is a communication device capable of receiving a signal transmitted from the fire alarm 600 and the relay device 700. The information processing device 912 is, for example, a computer and is connected to the external appliance 910. The same process as described above is performed in the multihop network. The external appliance 910 receives the information relating to the relay route, and the information processing device 912 displays the updated information relating to the relay route. The information processing device 912 displays the updated information relating to the relay route.

Derivation of the definitive route cost may be started or terminated by an instruction of the constructor. For example, the external appliance 900 or the external appliance 910 may transmit an instruction to search for a relay route to each fire alarm 600 in response to a user operation of the constructor in the user operation unit (not shown) provided in the external appliance 900 or the information processing device 912. In that process, each of the plurality of fire alarms 600 starts deriving the cost upon receiving the instruction to search for a relay route from the external appliance 900 or the external appliance 910.

When a plurality of fire alarms 600 are searching for a relay route, the external appliance 900 or the external appliance 910 may transmit the instruction to search for a relay route to each fire alarm 600 in response to a user operation of the constructor in the user operation unit (not shown) provided in the external appliance 900 or the information processing device 912. In that process, each of the plurality of fire alarms 600 terminates the derivation of the cost upon receiving the instruction to terminate the search for a relay route from the external appliance 900 or the external appliance 910.

The user operation unit (not shown) that receives an instruction from the constructor may be provided in each fire alarm 600. Each of the plurality of fire alarms 600 starts deriving the cost upon receiving the instruction to search for a relay route. Further, each of the plurality of fire alarms 600 terminates the derivation of the cost upon receiving the instruction to terminate the search for a relay route.

(4) Revision to time slot assignment

As described above, the time slots 1030 should be assigned to the respective fire alarms 600 in accordance with the hop count between the relay device 700 and the fire alarm 600. However, assignment may not be in accordance with the hop count in the construction of the alarm system 1000. In such an assignment of the time slots 1030, a large transfer delay in the communication signal could result. A description will now be given of the process of revising the assignment when an assignment in accordance with the hop count is not made after the alarm system 1000 is constructed and while the alarm system 1000 is in operation.

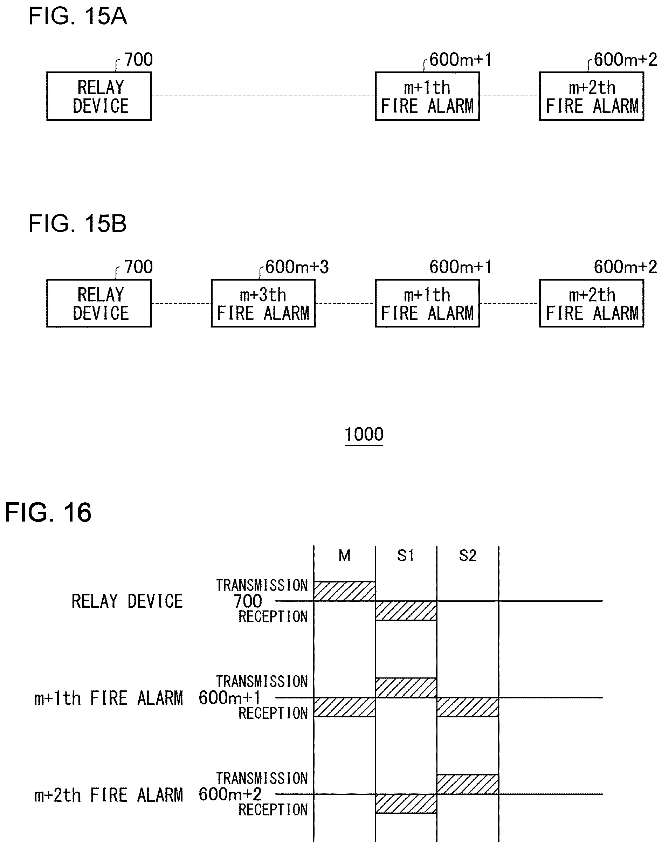

Figs. 15A-15B show a partial configuration of the alarm system 1000. Fig. 15A shows a configuration of the first stage of the alarm system 1000. The m+1th fire alarm 600m+1 is connected to the relay device 700, and the m+2th fire alarm 600m+2 is connected to the m+1th fire alarm 600m+1 to form a multihop network. The hop count between the relay device 700 and the m+1th fire alarm 600m+1 is "1", and the hop count between the relay device 700 and the m+2th fire alarm 600m+2 is "2".

Fig. 16 shows an outline of downlink communication in the alarm system 1000. "M" denotes the time slot 1030 assigned to the relay device 700, "S1" denotes the time slot 1030 assigned to the m+1th fire alarm 600m+1, and "S2" denotes the time slot 1030 assigned to the m+2th fire alarm 600m+2. As in the foregoing examples, the smaller the hop count, the earlier the time slot 1030 assigned to the fire alarm 600.

The relay device 700 transmits the communication signal in the time slot 1030 "M", and the m+1th fire alarm 600m+1 receives the communication signal in the time slot 1030 "M". The m+1th fire alarm 600m+1 transmits the communication signal in the time slot 1030 "S1", and the m+2th fire alarm 600m+2 receives the communication signal in the time slot 1030 "S1". The m+2th fire alarm 600m+2 transmits the communication signal in the time slot 1030 "S2". A description of transmission and reception of a response signal is omitted in the above description.

Fig. 15B shows a configuration of the second stage of the alarm system 1000. The configuration is derived from adding the m+3th fire alarm 600m+3 to Fig. 15B. The m+3th fire alarm 600m+3 is connected to the relay device 700, the m+1th fire alarm 600m+1 is connected to the m+3th fire alarm 600m+3, and the m+2th fire alarm 600m+2 is connected to the m+1th fire alarm 600m+1 to form a multihop network.

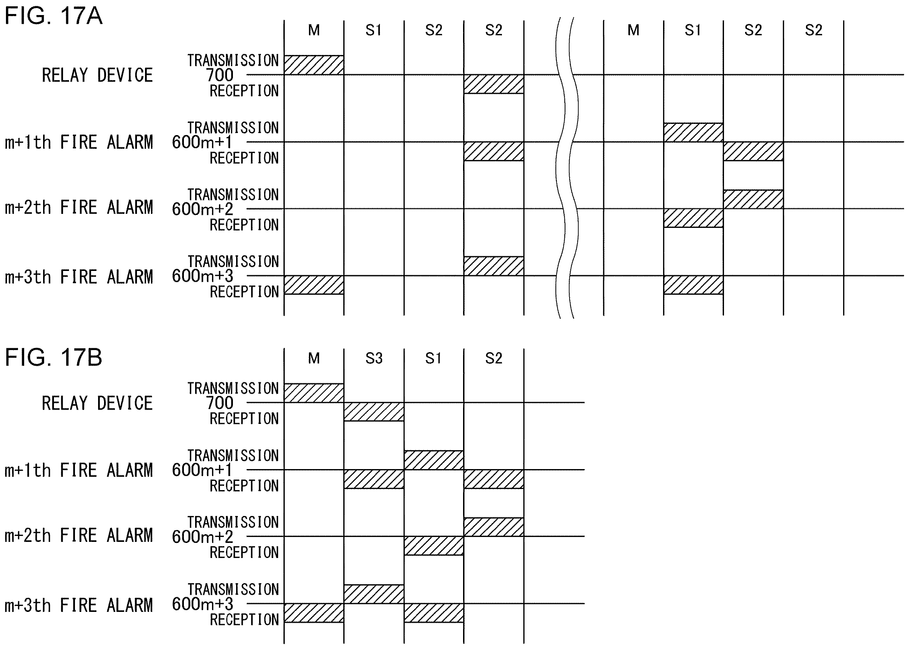

Figs. 17A-17B show an outline of downlink communication in the alarm system 1000. The time slot 1030 "S3" in Fig. 17A is provided later than the time slot 1030 "S2". The newly added m+3th fire alarm 600m+3 is allocated to the time slot 1030 "S3".

The relay device 700 transmits the communication signal in the time slot 1030 "M", and the m+3th fire alarm 600m+3 receives the communication signal in the time slot 1030 "M". The m+3th fire alarm 600m+3 transmits the communication signal in the time slot 1030 "S3", and the m+1th fire alarm 600m+1 receives the communication signal in the time slot 1030 "S3". The m+1th fire alarm 600m+1 transmits the communication signal in the time slot 1030 "S1" of the next frame 1020, and the m+2th fire alarm 600m+2 receives the communication signal in the time slot 1030 "S1". The m+2th fire alarm 600m+2 transmits the communication signal in the time slot 1030 "S2".

In other words, the time slot 1030 "S3", which is later than the time slot 1030 "S1" assigned to the m+1th fire alarm 600m+1 with the hop count "2", is assigned to the m+3th fire alarm 600m+3 with the hop count "1" to the relay device 700 so that a transfer delay is produced. A description of transmission and reception of a response signal is omitted in the above description.

To suppress such a transfer delay, the assignment is modified by the relay device 700 or the management device 800 after the m+3th fire alarm 600m+3 is added. When the time slot 1030 "S1" and the time slot 1030 "S2" are provided earlier than the time slot 1030 "S3" in the downlink communication, for example, the assignment unit 722 of the relay device 700 modifies the assignment such that the time slot 1030 "S1" and the time slot 1030 "S2" are provided later than the time slot 1030 "S3". The downlink communication is communication on the downlink line, and the signal is transferred in a direction away from the relay device 700 in the multihop network.

Further, when the time slot 1030 "S1" and the time slot 1030 "S2" are provided later than the time slot 1030 "S3" in the uplink communication, the assignment unit 722 modifies the assignment such that the time slot 1030 "S1" and the time slot 1030 "S2" are provided earlier than the time slot 1030 "S3". The uplink communication is communication on the uplink line, and the signal is transferred in a direction toward the relay device 700 in the multihop network.

An identification number for identifying the fire alarm 600 is assigned to each fire alarm 600. The identification number is assigned in the order of construction. Referring to Fig. 15B, therefore, the m+3th fire alarm 600m+3 with the identification number "3", the m+1th fire alarm 600m+1 with the identification number "1", and the m+2th fire alarm 600m+2 with the identification number "2" are arranged in the stated order. To manage a plurality of fire alarms 600, it is preferred that the identification numbers are arranged in the order that the fire alarms 600 are arranged along the relay route. The relay device 700 or the management device 800 determines the identification number of each fire alarm 600 in accordance with the hop count. Referring to Fig. 15B, the identification number "S1" is assigned to the m+3th fire alarm 600m+3, the identification number "2" is assigned to the m+1th fire alarm 600m+1, and the identification number "3" is assigned to the m+2th fire alarm 600m+2.

The device, the system, or the entity that executes the method according to the disclosure is provided with a computer. By causing the computer to run a program, the function of the device, the system, or the entity that executes the method according to the disclosure is realized. The computer is comprised of a processor that operates in accordance with the program as a main hardware feature. The disclosure is non-limiting as to the type of the processor so long as the function is realized by running the program. The processor is comprised of one or a plurality of electronic circuits including a semiconductor integrated circuit (IC) or a large-scale integration (LSI). The plurality of electronic circuits may be integrated in one chip or provided in a plurality of chips. The plurality of chips may be aggregated in one device or provided in a plurality of apparatuses. The program is recorded in a non-transitory recording medium such as a computer-readable ROM, optical disk, and hard disk drive. The program may be stored in a recording medium in advance or supplied to a recording medium via wide area communication network including the Internet.

According to the embodiment, the relay route with a smaller cost is preferentially selected. When the power consumption in the fire alarm 600 included in the relay route grows large, selection of that relay route is made less likely. Therefore, an increase in the power consumption in the fire alarm 600 included in a multihop networks is suppressed. Further, the cost is derived based on the first indicator determined by the link quality information and the second indicator determined by the power consumption in the other fire alarm 600. When a notification is received from the other fire alarm 600, the impact from the second indicator on the cost is increased so that selection of the relay route including the other fire alarm 600 can be made less likely. Further, the cost is changed merely by increasing the impact from the second indicator so that the process is simplified. Further, the first threshold value and the second threshold value are defined for power consumption, and the impact from the second indicator on the cost is changed in accordance with the magnitude of power consumption relative to the first threshold value and the second threshold value. Therefore, detailed setting of the relay route is enabled. Further, the power consumption is derived based on the communication frequency so that the power consumption can be estimated easily. Further, the power consumption is derived based on the number of other fire alarms 600 directly in communication so that the power consumption can be estimated easily. Further, the power consumption is derived based on the battery level of the fire alarm 600 so that the power consumption can be estimated easily.

Further, each of the plurality of fire alarms 600 transmits the information relating to the relay route to the external appliance 900 or the external appliance 910 so that it is possible to provide information for determining at which position the fire alarm 600 should be constructed to build a multihop network. Further, the information for determining at which position the fire alarm 600 should be constructed is provided so that the multihop network can be built easily. Further, when a new fire alarm 600 is added, each of the plurality of fire alarms 600 updates the information relating to the relay route and transmits the updated information to the external appliance 900 or the external appliance 910 so that it is possible to provide information for determining at which position the new fire alarm 600 should be constructed. Further, the information relating to the relay route includes the cost so that it is easy to understand the situation of routing. Further, the information relating to the relay route is displayed on the external appliance 900 so that it is easy to check the information relating to the relay route.

Further, upon receiving an instruction to search for a relay route from the external appliance 900 or the external appliance 910, each of the plurality of fire alarms 600 starts deriving the cost. Therefore, a trigger to start deriving the cost can be provided. Further, upon receiving an instruction to terminate the search for a relay route from the external appliance 900 or the external appliance 910, each of the plurality of fire alarms 600 terminates deriving the cost. Therefore, a trigger to terminate deriving the cost can be provided. Further, upon receiving an instruction to search for a relay route in the user operation unit, each of the plurality of fire alarms 600 starts deriving the cost. Therefore, a trigger to start deriving the cost can be provided. Further, upon receiving an instruction to terminate the search for a relay route in the user operation unit, each of the plurality of fire alarms 600 terminates deriving the cost. Therefore, a trigger to terminate deriving the cost can be provided.

Further, the order of the time slots 1030 assigned to the respective fire alarms 600 is determined in accordance with the hop count between the fire alarm 600 and the relay device 700 so that the delay time in transfer in a multihop network can be reduced. Further, the larger the hop count of the fire alarm 600, the later the time slot 1030 assigned to the fire alarm 600 in downlink communication so that the delay time in transfer in a multihop network can be reduced. Further, the larger the hop count of the fire alarm 600, the earlier the time slot 1030 assigned to the fire alarm 600 in uplink communication so that the delay time in transfer in a multihop network can be reduced.

Further, when the fire alarm 600 with a large hop count is assigned to an earlier time slot 1030 in downlink communication, the assignment is modified such that a later time slot 1030 is assigned to that fire alarm 600. Therefore, the delay time in transfer in a multihop network can be reduced. Further, when the fire alarm 600 with a large hop count is assigned to a later time slot 1030 in uplink communication, the assignment is modified such that an earlier time slot 1030 is assigned to that fire alarm 600. Therefore, the delay time in transfer in a multihop network can be reduced.

Further, the assignment is modified after the construction of the alarm system 1000 so that the frequency of assignment modification can be reduced. Further, the identification number of the fire alarm 600 is determined in accordance with the hop count so that it is easy to manage the fire alarm 600. The relay device 700 performs the assignment so that the relay device 700 can manage the assignment. Further, the management device 800 performs the assignment so that the management device 800 can manage the assignment.

Described above is an explanation based on an exemplary embodiment. The embodiment is intended to be illustrative only and it will be understood by those skilled in the art that various modifications to constituting elements and processes could be developed and that such modifications are also within the scope of the present invention.

The n+3th fire alarm 600n+3 according to the embodiment receiving a notification from the n+1th fire alarm 600n+1 makes it less likely that the fist relay route including the n+1th fire alarm 600n+1 is selected. Alternatively, for example, the n+3th fire alarm 600n+3 receiving a user operation makes it less likely that the first relay route is selected. The user operation is received by, for example, the management device 800, the external appliance 900, the external appliance 910, or the fire alarm 600. According to this variation, the relay route can be modified in accordance with the user's intent.

The fire alarms 600 of the embodiment exchange link quality to determine the relay route. Alternatively, however, the fire alarms 600 may exchange the value of power consumption. The value of power consumption is reflected in C, i.e., the third term on the right side of expression (1) and expression (2). For example, the larger the value of power consumption, the larger the value of "C". According to this variation, the impact of power consumption can be reflected in the tentative route cost or the definitive route cost.

[REFERENCE SIGNS LIST]

600 fire alarm, 620 communication unit, 622 processing unit, 624 control unit, 630 fire detection sensor, 632 buzzer, 700 relay device, 710 communication unit, 712 output unit, 720 control unit, 722 assignment unit, 800 management device, 900 external appliance, 902 communication unit, 904 control unit, 906 display unit, 910 external appliance, 912 information processing device, 1000 alarm system

**Claims**

1. An alarm system (1000) comprising a plurality of alarms (600) that form a multihop network extending from a relay device (700), wherein

   the plurality of alarms (600) include a first alarm (600n+1), a second alarm (600n+2), and a third alarm (600n+3),
   the third alarm (600n+3) is capable of communicating with the first alarm (600n+1) and the second alarm (600n+2),
   the third alarm (600n+3) derives a first cost for a first relay route for communicating with the relay device (700) via the first alarm (600n+1), by exchanging information on quality of link with the first alarm (600n+1), and derives a second cost for a second relay route for communicating with the relay device (700) via the second alarm (600n+2), by exchanging information on quality of link with the second alarm (600n+2),
   the third alarm (600n+3) selects the first relay route when the first cost is smaller than the second cost,
   when power consumption in the first alarm (600n+1) grows larger than a threshold value, the first alarm (600n+1) transmits a notification indicating an increase in power consumption to the third alarm (600n+3), and
   wherein the third alarm (600n+3) derives the first cost based on a first indicator ($Ka \times Max$) determined by the information on quality of link with the first alarm (600n+1) and a second indicator ($Kb \times C$) determined by power consumption in the first alarm (600), and wherein the third alarm (600n+3) derives the second cost based on a first indicator ($Ka \times Max$) determined by the information on quality of link with the second alarm (600n+2) and a second indicator ($Kb \times C$) determined by power consumption in the second alarm (600n+2),
   when the third alarm (600n+3) receives the notification from the first alarm (600n+1), the third alarm (600n+3) increases the second indicator in the first cost.

2. The alarm system (1000) according to claim 1, wherein

   the first alarm (600n+1) defines a first threshold value for power consumption and a second threshold value larger than the first threshold value,
   when the power consumption in the first alarm (600n+1) grows larger than the first threshold value, the first alarm (600n+1) transmits a first notification to the third alarm (600n+3),
   when the power consumption in the first alarm (600n+1) grows larger than the second threshold value, the first alarm (600n+1) transmits a second notification to the third alarm (600n+3), and
   the third alarm (600n+3) increases the second indicator in the first cost when the second notification is received from the first alarm (600n+1) by an amount larger than when the first notification is received.

3. The alarm system (1000) according to any one of claims 1 through 2, wherein

   the first alarm (600n+1) derives the power consumption based on a communication frequency of the first alarm (600n+1), and

the larger the communication frequency, the larger the power consumption in the first alarm (600n+1).

4. The alarm system (1000) according to any one of claims 1 through 2, wherein

the first alarm (600n+1) derives the power consumption based on the number of other alarms (600) that the first alarm (600n+1) directly communicates with, and
the larger the number of other alarms (600), the larger the power consumption in the first alarm (600n+1).

5. The alarm system (1000) according to any one of claims 1 through 2, wherein

the first alarm (600n+1) derives the power consumption based on a battery level of the first alarm (600n+1), and
the lower the battery level, the larger the power consumption in the first alarm (600n+1).

6. The alarm system (1000) according to any one of claims 1 through 5, wherein
the third alarm (600n+3) increases the second indicator in the first cost, when the third alarm (600n+3) receives a user operation.

7. An alarm (600) of a plurality of alarms (600) that form a multihop network extending from a relay device (700), comprising:

a communication unit (620) capable of communicating with a first alarm (600n+1) and a second alarm (600n+2) of the plurality of alarms (600); and
a control unit (624) that derives a first cost for a first relay route for communicating with the relay device (700) via the first alarm (600n+1), by exchanging information on quality of link with the first alarm (600n+1) through the communication unit (620), derives a second cost for a second relay route for communicating with the relay device (700) via the second alarm (600n+2), by exchanging information on quality of link with the second alarm (600n+2) through the communication unit (620), and then selects the first relay route when the first cost is smaller than the second cost, wherein
the communication unit (620) receives a notification indicating an increase in power consumption from the first alarm when power consumption in the first alarm (600n+1) grows larger than a threshold value, and
wherein the control unit (624) derives the first cost based on a first indicator determined by the information on quality of link with the first alarm (600n+1) and a second indicator determined by power consumption in the first alarm (600), and wherein the control unit (624) derives the second cost based on a first indicator (Ka×Max) determined by the information on quality of link with the second alarm (600n+2) and a second indicator (Kb×C) determined by power consumption in the second alarm (600n+2),
when the communication unit (620) receives the notification from the first alarm (600n+1), the communication unit (620) increases the second indicator in the first cost.

8. A route setting method in an alarm (600) of a plurality of alarms (600) that form a multihop network extending from a relay device (700), the alarm (600) being capable of communicating with a first alarm (600n+1) and a second alarm (600n+2) of the plurality of alarms (600), the method comprising:

deriving a first cost for a first relay route for communicating with the relay device (700) via the first alarm (600n+1), by exchanging information on quality of link with the first alarm (600n+1), and deriving a second cost for a second relay route for communicating with the relay device (700) via the second alarm (600n+2), by exchanging information on quality of link with the second alarm (600n+2);selecting the first relay route when the first cost is smaller than the second cost;
when power consumption in the first alarm (600n+1) grows larger than a threshold value, receiving a notification indicating an increase in power consumption from the first alarm (600n+1);
wherein the method further comprises
deriving the first cost based on a first indicator (Ka×Max) determined by the information on quality of link with the first alarm (600n+1) and a second indicator (Kb×C) determined by power consumption in the first alarm (600n+1),
deriving the second cost based on a first indicator (Ka×Max) determined by the information on quality of link with the second alarm (600n+2) and a second indicator (Kb×C) determined by power consumption in the second alarm (600n+2), and
when receiving the notification from the first alarm (600n+1), increasing the second indicator in the first cost.

9. A program for execution by an alarm (600) of a plurality of alarms (600) that form a multihop network extending from a relay device (700), the alarm (600) being capable of communicating with a first alarm (600n+1) and a second alarm (600n+2) of the plurality of alarms (600), the program comprising computer-implemented modules including:

a module that derives a first cost for a first relay route for communicating with the relay device (700) via the first alarm (600n+1), by exchanging information on quality of link with the first alarm (600n+1), and deriving a second cost for a second relay route for communicating with the relay device (700) via the second alarm (600n+2), by exchanging information on quality of link with the second alarm (600n+2);

a module that selects the first relay route when the first cost is smaller than the second cost;

a module that, when power consumption in the first alarm (600n+1) grows larger than a threshold value, receives a notification indicating an increase in power consumption from the first alarm (600n+1);

a module that derives the first cost based on a first indicator (Ka×Max) determined by the information on quality of link with the first alarm (600n+1) and a second indicator (Kb×C) determined by power consumption in the first alarm (600n+1),

a module that derives the second cost based on a first indicator (Ka×Max) determined by the information on quality of link with the second alarm (600n+2) and a second indicator (Kb×C) determined by power consumption in the second alarm (600n+2), and

a module that, when receiving the notification from the first alarm (600n+1), increasing the second indicator in the first cost.

## Patentansprüche

1. Alarmsystem (1000), mehrere Alarme (600) aufweisend, die ein Multihop-Netzwerk bilden, das sich von einer Relaisvorrichtung (700) aus erstreckt, wobei

die mehreren Alarme (600) einen ersten Alarm (600n+1), einen zweiten Alarm (600n+2) und einen dritten Alarm (600n+3) umfassen,

wobei der dritte Alarm (600n+3) in der Lage ist, mit dem ersten Alarm (600n+1) und dem zweiten Alarm (600n+2) zu kommunizieren,

wobei der dritte Alarm (600n+3) erste Kosten für eine erste Relaisroute zur Kommunikation mit der Relaisvorrichtung (700) über den ersten Alarm (600n+1) durch Austauschen von Informationen über die Verbindungsqualität mit dem ersten Alarm (600n+1) ableitet und zweite Kosten für eine zweite Relaisroute zur Kommunikation mit der Relaisvorrichtung (700) über den zweiten Alarm (600n+2) durch Austauschen von Informationen über die Verbindungsqualität mit dem zweiten Alarm (600n+2) ableitet,

der dritte Alarm (600n+3) die erste Relaisroute auswählt, wenn die ersten Kosten kleiner sind als die zweiten Kosten,

wenn ein Stromverbrauch in dem ersten Alarm (600n+1) einen Schwellenwert überschreitet, der erste Alarm (600n+1) eine Benachrichtigung, die einen Anstieg des Stromverbrauchs anzeigt, an den dritten Alarm (600n+3) sendet, und

wobei der dritte Alarm (600n+3) die ersten Kosten auf der Grundlage eines ersten Indikators (Ka x Max), der durch die Informationen über die Verbindungsqualität mit dem ersten Alarm (600n+1) bestimmt wird, und eines zweiten Indikators (Kb x C), der durch den Stromverbrauch in dem ersten Alarm (600) bestimmt wird, ableitet, und wobei der dritte Alarm (600n+3) die zweiten Kosten auf der Grundlage eines ersten Indikators (Ka x Max), der durch die Informationen über die Verbindungsqualität mit dem zweiten Alarm (600n+2) bestimmt wird, und eines zweiten Indikators (Kb x C), der durch den Stromverbrauch in dem zweiten Alarm (600n+2) bestimmt wird, ableitet, wenn der dritte Alarm (600n+3) die Benachrichtigung von dem ersten Alarm (600n+1) empfängt, der dritte Alarm (600n+3) den zweiten Indikator in den ersten Kosten erhöht.

2. Alarmsystem (1000) nach Anspruch 1, wobei

der erste Alarm (600n+1) einen ersten Schwellenwert für den Stromverbrauch und einen zweiten Schwellenwert, der größer als der erste Schwellenwert ist, definiert,

wenn der Stromverbrauch in dem ersten Alarm (600n+1) den ersten Schwellenwert überschreitet, der erste Alarm (600n+1) eine erste Benachrichtigung an den dritten Alarm (600n+3) sendet,

wenn der Stromverbrauch in dem ersten Alarm (600n+1) den zweiten Schwellenwert überschreitet, der erste Alarm (600n+1) eine zweite Benachrichtigung an den dritten Alarm (600n+3) sendet und

der dritte Alarm (600n+3) den zweiten Indikator in den ersten Kosten, wenn die zweite Benachrichtigung von dem ersten Alarm (600n+1) empfangen wird, um einen Betrag erhöht, der größer ist als bei Empfang der ersten Benachrichtigung.

3. Alarmsystem (1000) nach einem der Ansprüche 1 bis 2, wobei

der erste Alarm (600n+1) den Stromverbrauch auf der Grundlage einer Kommunikationshäufigkeit des ersten Alarms (600n+1) ableitet und
je größer die Kommunikationshäufigkeit ist, desto größer der Stromverbrauch in dem ersten Alarm (600n+1) ist.

4. Alarmsystem (1000) nach einem der Ansprüche 1 bis 2, wobei

der erste Alarm (600n+1) den Stromverbrauch auf der Grundlage der Anzahl anderer Alarme (600), mit denen der erste Alarm (600n+1) direkt kommuniziert, ableitet und
je größer die Anzahl anderer Alarme (600) ist, desto größer der Stromverbrauch in dem ersten Alarm (600n+1) ist.

5. Alarmsystem (1000) nach einem der Ansprüche 1 bis 2, wobei

der erste Alarm (600n+1) den Stromverbrauch auf der Grundlage eines Batteriestands des ersten Alarms (600n+1) ableitet und
je niedriger der Batteriestand ist, desto größer der Stromverbrauch in dem ersten Alarm (600n+1) ist.

6. Alarmsystem (1000) nach einem der Ansprüche 1 bis 5, wobei
der dritte Alarm (600n+3) den zweiten Indikator in den ersten Kosten erhöht, wenn der dritte Alarm (600n+3) eine Benutzerbedienung empfängt.

7. Alarm (600) von mehreren Alarmen (600), die ein Multihop-Netzwerk bilden, das sich von einer Relaisvorrichtung (700) aus erstreckt, aufweisend:

eine Kommunikationseinheit (620), die in der Lage ist, mit einem ersten Alarm (600n+1) und einem zweiten Alarm (600n+2) der mehreren Alarme (600) zu kommunizieren; und
eine Steuereinheit (624), die erste Kosten für eine erste Relaisroute zur Kommunikation mit der Relaisvorrichtung (700) über den ersten Alarm (600n+1) durch Austauschen von Informationen über die Verbindungsqualität mit dem ersten Alarm (600n+1) über die Kommunikationseinheit (620) ableitet, zweite Kosten für eine zweite Relaisroute zur Kommunikation mit der Relaisvorrichtung (700) über den zweiten Alarm (600n+2) durch Austauschen von Informationen über die Verbindungsqualität mit dem zweiten Alarm (600n+2) über die Kommunikationseinheit (620) ableitet und dann die erste Relaisroute auswählt, wenn die ersten Kosten kleiner sind als die zweiten Kosten, wobei
die Kommunikationseinheit (620) eine Benachrichtigung, die einen Anstieg des Stromverbrauchs anzeigt, von der ersten Alarmanlage empfängt, wenn ein Stromverbrauch in dem ersten Alarm (600n+1) einen Schwellenwert überschreitet, und
wobei die Steuereinheit (624) die ersten Kosten auf der Grundlage eines ersten Indikators, der durch die Informationen über die Verbindungsqualität mit dem ersten Alarm (600n+1) bestimmt wird, und eines zweiten Indikators, der durch den Stromverbrauch in dem ersten Alarm (600) bestimmt wird, ableitet, und wobei die Steuereinheit (624) die zweiten Kosten auf der Grundlage eines ersten Indikators (KaxMax), der durch die Informationen über die Verbindungsqualität mit dem zweiten Alarm (600n+2) bestimmt wird, und eines zweiten Indikators (Kb x C), der durch den Stromverbrauch in dem zweiten Alarm (600n+2) bestimmt wird, ableitet, wenn die Kommunikationseinheit (620) die Benachrichtigung von dem ersten Alarm (600n+1) empfängt, die Kommunikationseinheit (620) den zweiten Indikator in den ersten Kosten erhöht.

8. Verfahren zum Einstellen einer Route in einem Alarm (600) von mehreren Alarmen (600), die ein Multihop-Netzwerk bilden, das sich von einer Relaisvorrichtung (700) aus erstreckt, wobei der Alarm (600) in der Lage ist, mit einem ersten Alarm (600n+1) und einem zweiten Alarm (600n+2) der mehreren Alarme (600) zu kommunizieren, wobei das Verfahren umfasst:

Ableiten erster Kosten für eine erste Relaisroute zur Kommunikation mit der Relaisvorrichtung (700) über den ersten Alarm (600n+1) durch Austauschen von Informationen über die Verbindungsqualität mit dem ersten Alarm (600n+1) und Ableiten zweiter Kosten für eine zweite Relaisroute zur Kommunikation mit der Relaisvorrichtung (700) über den zweiten Alarm (600n+2) durch Austauschen von Informationen über die Verbindungsqualität mit dem zweiten Alarm (600n+2); Auswählen der ersten Relaisroute, wenn die ersten Kosten kleiner sind als die zweiten Kosten;

wenn ein Stromverbrauch in dem ersten Alarm (600n+1) einen Schwellenwert überschreitet, Empfangen einer Benachrichtigung, die einen Anstieg des Stromverbrauchs anzeigt, von dem ersten Alarm (600n+1);

wobei das Verfahren ferner umfasst:

Ableiten der ersten Kosten auf der Grundlage eines ersten Indikators (Ka x Max), der durch die Informationen über die Verbindungsqualität mit dem ersten Alarm (600n+1) bestimmt wird, und eines zweiten Indikators (Kb x C), der durch den Stromverbrauch in dem ersten Alarm (600n+1) bestimmt wird,

Ableiten der zweiten Kosten auf der Grundlage eines ersten Indikators (KaxMax), der durch die Informationen über die Verbindungsqualität mit dem zweiten Alarm (600n+2) bestimmt wird, und eines zweiten Indikators (Kb x C), der durch den Stromverbrauch in dem zweiten Alarm (600n+2) bestimmt wird, und bei Empfang der Benachrichtigung von dem ersten Alarm (600n+1), Erhöhen des zweiten Indikators in den ersten Kosten.

9.  Programm zur Ausführung durch einen Alarm (600) von mehreren Alarmen (600), die ein Multihop-Netzwerk bilden, das sich von einer Relaisvorrichtung (700) aus erstreckt, wobei der Alarm (600) in der Lage ist, mit einem ersten Alarm (600n+1) und einem zweiten Alarm (600n+2) der mehreren Alarme (600) zu kommunizieren, wobei das Programm computerimplementierte Module aufweist, zu denen gehören:

ein Modul, das erste Kosten für eine erste Relaisroute zur Kommunikation mit der Relaisvorrichtung (700) über den ersten Alarm (600n+1) durch Austauschen von Informationen über die Verbindungsqualität mit dem ersten Alarm (600n+1) ableitet, und Ableiten zweiter Kosten für eine zweite Relaisroute zur Kommunikation mit der Relaisvorrichtung (700) über den zweiten Alarm (600n+2) durch Austauschen von Informationen über die Verbindungsqualität mit dem zweiten Alarm (600n+2);

ein Modul, das die erste Relaisroute auswählt, wenn die ersten Kosten kleiner sind als die zweiten Kosten;

ein Modul, das, wenn ein Stromverbrauch in dem ersten Alarm (600n+1) einen Schwellenwert überschreitet, eine Benachrichtigung, die einen Anstieg des Stromverbrauchs anzeigt, von dem ersten Alarm (600n+1) empfängt;

ein Modul, das die ersten Kosten auf der Grundlage eines ersten Indikators (KaxMax), der durch die Informationen über die Verbindungsqualität mit dem ersten Alarm (600n+1) bestimmt wird, und eines zweiten Indikators (Kb x C), der durch den Stromverbrauch in dem ersten Alarm (600n+1) bestimmt wird, ableitet,

ein Modul, das die zweiten Kosten auf der Grundlage eines ersten Indikators (Ka x Max), der durch die Informationen über die Verbindungsqualität mit dem zweiten Alarm (600n+2) bestimmt wird, und eines zweiten Indikators (Kb x C), der durch den Stromverbrauch in dem zweiten Alarm (600n+2) bestimmt wird, ableitet und ein Modul, das bei Empfang der Benachrichtigung von dem ersten Alarm (600n+1) den zweiten Indikator in den ersten Kosten erhöht.

### Revendications

1.  Système d'alarme (1000) comprenant une pluralité d'alarmes (600) qui forment un réseau multibond qui s'étend depuis un dispositif relais (700), dans lequel

la pluralité d'alarmes (600) comprend une première alarme (600n+1), une deuxième alarme (600n+2) et une troisième alarme (600n+3),

la troisième alarme (600n+3) est capable de communiquer avec la première alarme (600n+1) et la deuxième alarme (600n+2),

la troisième alarme (600n+3) dérive un premier coût pour un premier trajet de relais afin de communiquer avec le dispositif relais (700) via la première alarme (600n+1), en échangeant des informations sur la qualité de la liaison avec la première alarme (600n+1), et dérive un deuxième coût pour un deuxième trajet de relais afin de communiquer avec le dispositif relais (700) via la deuxième alarme (600n+2), en échangeant des informations sur la qualité de la liaison avec la deuxième alarme (600n+2),

la troisième alarme (600n+3) sélectionne le premier trajet de relais lorsque le premier coût est inférieur au deuxième coût,

lorsque la consommation d'énergie dans la première alarme (600n+1) augmente au-delà d'une valeur de seuil, la première alarme (600n+1) transmet une notification qui indique une augmentation de la consommation d'énergie à la troisième alarme (600n+3), et

dans lequel la troisième alarme (600n+3) dérive le premier coût sur la base d'un premier indicateur (KaxMax) déterminé par les informations sur la qualité de la liaison avec la première alarme (600n+1) et d'un deuxième indicateur (KbxC) déterminé par la consommation d'énergie dans la première alarme (600), et dans lequel la troisième alarme (600n+3) dérive le deuxième coût sur la base d'un premier indicateur (KaxMax) déterminé par les informations sur la qualité de la liaison avec la deuxième alarme (600n+2) et d'un deuxième indicateur (KbxC) déterminé par la consommation d'énergie dans la deuxième alarme (600n+2),

lorsque la troisième alarme (600n+3) reçoit la notification de la part de la première alarme (600n+1), la troisième alarme (600n+3) augmente le deuxième indicateur dans le premier coût.

2.  Système d'alarme (1000) selon la revendication 1, dans lequel

la première alarme (600n+1) définit une première valeur de seuil pour la consommation d'énergie et une deuxième valeur de seuil supérieure à la première valeur de seuil,

lorsque la consommation d'énergie dans la première alarme (600n+1) augmente au-delà de la première valeur de seuil, la première alarme (600n+1) transmet une première notification à la troisième alarme (600n+3),

lorsque la consommation d'énergie dans la première alarme (600n+1) augmente au-delà de la deuxième valeur de seuil, la première alarme (600n+1) transmet une deuxième notification à la troisième alarme (600n+3), et

la troisième alarme (600n+3) augmente le deuxième indicateur dans le premier coût lorsque la deuxième notification est reçue de la part de la première alarme (600n+1) selon une quantité supérieure à celle au moment auquel la première notification a été reçue.

3.  Système d'alarme (1000) selon l'une quelconque des revendications 1 à 2, dans lequel

la première alarme (600n+1) dérive la consommation d'énergie sur la base d'une fréquence de communication de la première alarme (600n+1), et

plus la fréquence de communication est élevée, plus la consommation d'énergie dans la première alarme (600n+1) est élevée.

4.  Système d'alarme (1000) selon l'une quelconque des revendications 1 à 2, dans lequel

la première alarme (600n+1) dérive la consommation d'énergie sur la base du nombre d'autres alarmes (600) avec lesquelles la première alarme (600n+1) communique directement, et

plus le nombre d'autres alarmes (600) est élevé, plus la consommation d'énergie dans la première alarme (600n+1) est élevée.

5.  Système d'alarme (1000) selon l'une quelconque des revendications 1 à 2, dans lequel

la première alarme (600n+1) dérive la consommation d'énergie sur la base d'un niveau de batterie de la première alarme (600n+1), et

plus le niveau de batterie est faible, plus la consommation d'énergie dans la première alarme (600n+1) est élevée.

6.  Système d'alarme (1000) selon l'une quelconque des revendications 1 à 5, dans lequel
la troisième alarme (600n+3) augmente le deuxième indicateur dans le premier coût, lorsque la troisième alarme (600n+3) reçoit une opération de l'utilisateur.

7.  Alarme (600) d'une pluralité d'alarmes (600) qui forment un réseau multibond qui s'étend depuis un dispositif relais (700), comprenant :

une unité de communication (620) capable de communiquer avec une première alarme (600n+1) et une deuxième alarme (600n+2) de la pluralité d'alarmes (600) ; et

une unité de commande (624) qui dérive un premier coût pour un premier trajet de relais afin de communiquer avec le dispositif relais (700) via la première alarme (600n+1), en échangeant des informations sur la qualité de la liaison avec la première alarme (600n+1) par le biais de l'unité de communication (620), dérive un deuxième coût pour un deuxième trajet de relais afin de communiquer avec le dispositif relais (700) via la deuxième alarme (600n+2), en échangeant des informations sur la qualité de la liaison avec la deuxième alarme (600n+2) par le biais de l'unité de communication (620), puis sélectionne le premier trajet de relais lorsque le premier coût est inférieur au deuxième coût, dans laquelle

l'unité de communication (620) reçoit une notification qui indique une augmentation de la consommation d'énergie de la part de la première alarme lorsque la consommation d'énergie dans la première alarme (600n+1) augmente au-delà d'une valeur de seuil, et

dans laquelle l'unité de commande (624) dérive le premier coût sur la base d'un premier indicateur déterminé par les informations sur la qualité de la liaison avec la première alarme (600n+1) et d'un deuxième indicateur déterminé par la consommation d'énergie dans la première alarme (600), et dans laquelle l'unité de commande (624) dérive le deuxième coût sur la base d'un premier indicateur (KaxMax) déterminé par les informations sur la qualité de la liaison avec la deuxième alarme (600n+2) et d'un deuxième indicateur (KbxC) déterminé par la consommation d'énergie dans la deuxième alarme (600n+2),

lorsque l'unité de communication (620) reçoit la notification de la part de la première alarme (600n+1), l'unité de communication (620) augmente le deuxième indicateur dans le premier coût.

8. Procédé de réglage de trajet de relais dans une alarme (600) d'une pluralité d'alarmes (600) qui forment un réseau multibond qui s'étend depuis un dispositif relais (700), l'alarme (600) étant capable de communiquer avec une première alarme (600n+1) et une deuxième alarme (600n+2) de la pluralité d'alarmes (600), le procédé comprenant :

la dérivation d'un premier coût pour un premier trajet de relais afin de communiquer avec le dispositif relais (700) via la première alarme (600n+1), en échangeant des informations sur la qualité de la liaison avec la première alarme (600n+1), et la dérivation d'un deuxième coût pour un deuxième trajet de relais afin de communiquer avec le dispositif relais (700) via la deuxième alarme (600n+2), en échangeant des informations sur la qualité de la liaison avec la deuxième alarme (600n+2) ; la sélection du premier trajet de relais lorsque le premier coût est inférieur au deuxième coût ;

lorsque la consommation d'énergie dans la première alarme (600n+1) augmente au-delà d'une valeur de seuil, la réception d'une notification qui indique une augmentation de la consommation d'énergie de la part de la première alarme (600n+1) ;

dans lequel le procédé comprend en outre

la dérivation du premier coût sur la base d'un premier indicateur (KaxMax) déterminé par les informations sur la qualité de la liaison avec la première alarme (600n+1) et d'un deuxième indicateur (KbxC) déterminé par la consommation d'énergie dans la première alarme (600n+1),

la dérivation du deuxième coût sur la base d'un premier indicateur (KaxMax) déterminé par les informations sur la qualité de la liaison avec la deuxième alarme (600n+2) et d'un deuxième indicateur (KbxC) déterminé par la consommation d'énergie dans la deuxième alarme (600n+2), et

lors de la réception de la notification de la part de la première alarme (600n+1), l'augmentation du deuxième indicateur dans le premier coût.

9. Programme destiné à être exécuté par une alarme (600) d'une pluralité d'alarmes (600) qui forment un réseau multibond qui s'étend depuis un dispositif relais (700), l'alarme (600) étant capable de communiquer avec une première alarme (600n+1) et une deuxième alarme (600n+2) de la pluralité d'alarmes (600), le programme comprenant des modules mis en œuvre par ordinateur comportant :

un module qui dérive un premier coût pour un premier trajet de relais afin de communiquer avec le dispositif relais (700) via la première alarme (600n+1), en échangeant des informations sur la qualité de la liaison avec la première alarme (600n+1), et qui dérive un deuxième coût pour un deuxième trajet de relais afin de communiquer avec le dispositif relais (700) via le deuxième alarme (600n+2), en échangeant des informations sur la qualité de la liaison avec la deuxième alarme (600n+2) ;

un module qui sélectionne le premier trajet de relais lorsque le premier coût est inférieur au deuxième coût ;

un module qui, lorsque la consommation d'énergie dans la première alarme (600n+1) augmente au-delà d'une valeur de seuil, reçoit une notification qui indique une augmentation de la consommation d'énergie de la part de la première alarme (600n+1) ;

un module qui dérive le premier coût sur la base d'un premier indicateur (KaxMax) déterminé par les informations sur la qualité de la liaison avec la première alarme (600n+1) et d'un deuxième indicateur (KbxC) déterminé par la consommation d'énergie dans la première alarme (600n+1),

un module qui dérive le deuxième coût sur la base d'un premier indicateur (KaxMax) déterminé par les informations sur la qualité de la liaison avec la deuxième alarme (600n+2) et d'un deuxième indicateur (KbxC) déterminé par la consommation d'énergie dans la deuxième alarme (600n+2), et

un module qui, lors de la réception de la notification de la part de la première alarme (600n+1), augmente le deuxième indicateur dans le premier coût.

FIG. 1

EP 4 191 555 B1

# FIG. 2

600

FIG. 3A

1010

1020

FIG. 3B

1030

FIG. 3C

FIG. 3D

1030

DOWNLINK COMMUNICATION
TIME SLOT

UPLINK COMMUNICATION
TIME SLOT

BACKUP

## FIG. 4

710

712

COMMUNICATION
UNIT

OUTPUT
UNIT

720

722

CONTROL UNIT

ASSIGNMENT
UNIT

RELAY DEVICE

700

FIG. 5

DOWNLINK COMMUNICATION
TIME SLOT

UPLINK COMMUNICATION
TIME SLOT

BACKUP

| M | S1 | S4 | S7 | S2 | S5 | S3 | S6 | • • • • • • • • • | S6 | S3 | S5 | S2 | S7 | S4 | S1 | M | |

1030

EP 4 191 555 B1

FIG. 6

| | M | S1 | S4 | S7 | S2 | S5 | S3 | S6 | |
|---|---|---|---|---|---|---|---|---|---|

FIRST RELAY DEVICE 700a
- TRANSMISSION
- RECEPTION

FOURTH FIRE ALARM 600d
- TRANSMISSION
- RECEPTION

FIFTH FIRE ALARM 600e
- TRANSMISSION
- RECEPTION

THIRD FIRE ALARM 600c
- TRANSMISSION
- RECEPTION

SIXTH FIRE ALARM 600f
- TRANSMISSION
- RECEPTION

EP 4 191 555 B1

FIG. 7

FIG. 8

FIG. 9

n+1th FIRE ALARM
600n+1

n+2th FIRE ALARM
600n+2

n+3th FIRE ALARM
600n+3

n+4th FIRE ALARM
600n+4

START     START     START     START

HELLO S10

HELLO S12

HELLO S14

HELLO(LINK_REQ) S16

HELLO(LINK_REQ) S18

HELLO(LINK_REP) S20

HELLO(LINK_REP) S22

END     END     END     END

EP 4 191 555 B1

FIG. 10A

| CONDITION | OPERATION |
|---|---|
| POWER CONSUMPTION $\leqq$ THRESHOLD VALUE | NONE |
| POWER CONSUMPTION $>$ THRESHOLD VALUE | TRANSMIT NOTIFICATION |

FIG. 10B

| CONDITION | OPERATION |
|---|---|
| POWER CONSUMPTION $\leqq$ FIRST THRESHOLD VALUE | NONE |
| FIRST THRESHOLD VALUE $<$ POWER CONSUMPTION $\leqq$ SECOND THRESHOLD VALUE | TRANSMIT FIRST NOTIFICATION |
| POWER CONSUMPTION $>$ SECOND THRESHOLD VALUE | TRANSMIT SECOND NOTIFICATION |

600n+1

## FIG. 11A

| CONDITION | Ka | Kb |
|---|---|---|
| NO RECEPTION | A1 | B1 |
| RECEIVE NOTIFICATION | A2 | B2 |

## FIG. 11B

| CONDITION | Ka | Kb |
|---|---|---|
| NO RECEPTION | A1 | B1 |
| RECEIVE FIRST NOTIFICATION | A2 | B2 |
| RECEIVE SECOND NOTIFICATION | A3 | B3 |

600n+3

FIG. 12A

FIG. 12B

FIG. 13

900

FIG. 14

| FIRE ALARM ID | . . . | COST |
|---|---|---|
| 1 | | C1 |
| 2 | | C2 |
| ⋮ | | ⋮ |
| X | . . . | CX |

906

## FIG. 15A

| 700 | | 600m+1 | 600m+2 |
|---|---|---|---|
| RELAY DEVICE | --------------------- | m+1th FIRE ALARM | m+2th FIRE ALARM |

## FIG. 15B

| 700 | 600m+3 | 600m+1 | 600m+2 |
|---|---|---|---|
| RELAY DEVICE | m+3th FIRE ALARM | m+1th FIRE ALARM | m+2th FIRE ALARM |

1000

## FIG. 16

## FIG. 17A

## FIG. 17B

EP 4 191 555 B1

**EP 4 191 555 B1**

**Patent documents cited in the description**

- JP 2011035468 A
- US 2020022059 A1
- KR 20130142426 A
- JP 2014071563 A